(19) Europäisches Patentamt / European Patent Office / Office européen des brevets

(11) **EP 2 941 625 B1**

(12) **FASCICULE DE BREVET EUROPEEN**

(45) Date de publication et mention de la délivrance du brevet:
**05.07.2017 Bulletin 2017/27**

(21) Numéro de dépôt: **14700237.2**

(22) Date de dépôt: **07.01.2014**

(51) Int Cl.:
***G01D 4/00*** *(2006.01)*

(86) Numéro de dépôt international:
**PCT/EP2014/050157**

(87) Numéro de publication internationale:
**WO 2014/106663 (10.07.2014 Gazette 2014/28)**

(54) **DISPOSITIF ET PROCÉDÉ DE TÉLÉRELÈVE DE COMPTEUR**

VORRICHTUNG UND VERFAHREN ZUR FERNABLESUNG EINES VERBRAUCHSZÄHLERS

DEVICE FOR AND METHOD OF TELEMETERING A UTILITY METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2013 FR 1350114**
**11.07.2013 FR 1356835**

(43) Date de publication de la demande:
**11.11.2015 Bulletin 2015/46**

(73) Titulaire: **Sagemcom Energy & Telecom SAS**
**92500 Rueil-Malmaison (FR)**

(72) Inventeurs:
• **SABATIER, Pierre**
**F-92500 Rueil Malmaison (FR)**
• **KUHN, Alex**
**F-92500 Rueil Malmaison (FR)**
• **TEBOULLE, Henri**
**F-92500 Rueil Malmaison (FR)**

(74) Mandataire: **Lavialle, Bruno François Stéphane et al**
**Cabinet Boettcher**
**16, rue Médéric**
**75017 Paris (FR)**

(56) Documents cités:
**US-A1- 2007 241 930    US-A1- 2009 284 392**
**US-A1- 2010 072 990    US-B1- 6 711 425**

**Description**

## DOMAINE TECHNIQUE GÉNÉRAL ET ART ANTÉRIEUR

La présente invention est relative à un dispositif et à un procédé de télérelève de compteur. Elle trouve avantageusement application pour le relevé à distance de mesures de compteur de volume de fluide et notamment de compteurs de gaz, d'autres applications étant néanmoins possibles (compteur d'eau, compteur de chaleur, etc.).

Les compteurs de débit de fluide, et notamment ceux chez l'abonné, se présentent classiquement sous la forme d'un boîtier qui comporte une fenêtre transparente permettant la lecture d'un totalisateur numérique à roues graduées.

Il a déjà été proposé d'équiper de tels compteurs de systèmes de télérelève permettant de transmettre à distance un relevé de consommation.

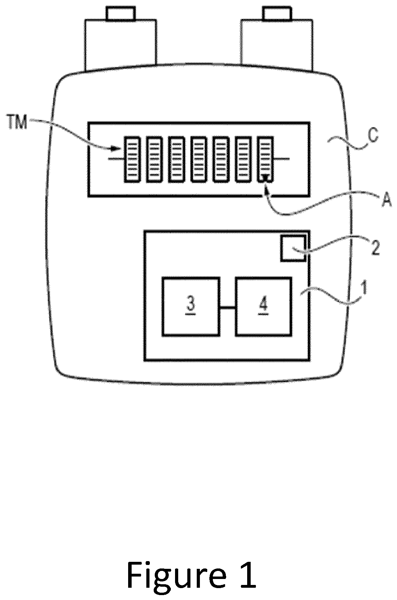

De tels systèmes de télérelève se présentent généralement, ainsi qu'illustré sur la figure 1, sous la forme d'un boîtier 1 que l'on rapporte sur le compteur C dont on veut assurer la télérelève.

Ce boîtier 1 intègre un capteur d'impulsions 2 pour détecter la rotation d'un petit aimant A fixé sur la roue « unité » du totalisateur mécanique TM du compteur C.

Une électronique 3 est prévue à l'intérieur du boîtier 1 pour décompter les rotations ainsi détectées et échanger, via un transmetteur 4 à l'intérieur ou à l'extérieur du boîtier, avec un serveur à distance auxquels sont transmis dans le temps les différents relevés de décompte.

Un tel capteur d'impulsions 2 est par exemple une ampoule Reed ou encore un capteur à effet Hall ou encore un capteur magnéto-résistif, qui détecte le passage de l'aimant à son niveau à chaque nouveau tour de la roue qui le porte et déclenche une impulsion de comptage qui est comptabilisée par l'électronique 3.

De tels capteurs sont des bistables calibrés pour répondre à une sollicitation bien particulière.

Ils basculent d'un état à un autre lorsque l'aimant A se retrouve au niveau de la fenêtre de lecture du compteur, quasiment au droit du capteur du dispositif de relève.

Les fonctionnalités qu'ils permettent sont donc limitées.

Notamment, par exemple, ils ne permettent pas de détecter la présence de l'aimant A dans le cas où la roue des unités serait dans une position où l'aimant serait diamétralement opposé au capteur.

Le document US 2009/284392 A1 décrit quant à lui un dispositif de télérelève destiné à être rapporté sur un compteur. Le dispositif de télérelève comporte un magnétomètre pour suivre la rotation d'un aimant.

Le document US 2010/072990 A1 décrit aussi un dispositif de télérelève de l'art antérieur.

## PRÉSENTATION GÉNÉRALE DE L'INVENTION

Un but de l'invention est de perfectionner encore les solutions de télérelève de mesure de compteur.

Elle propose à cet effet un dispositif de télérelève destiné à être rapporté sur un compteur et comportant au moins un magnétomètre et un jeu de capteurs bistables pour le suivi des rotations d'un aimant intégré à une roue d'un totalisateur mécanique du compteur. Le magnétomètre et les capteurs bistables sont configurés pour mesurer un champ magnétique généré par l'aimant et le dispositif est configuré pour produire un signal échantillonné de ces mesures permettant de détecter une rotation de l'aimant.

Le magnétomètre est par exemple un magnétomètre 3D. Il a une sensibilité de l'ordre du microT ou inférieure.

Notamment, les capteurs bistables peuvent comporter différentes orientations et/ou différents seuils de basculement. Le dispositif comporte au moins un magnétomètre et au moins un jeu de capteurs bistables.

Il comporte alors par exemple une électronique qui réveille le magnétomètre épisodiquement.

Le dispositif peut comporter un boîtier d'électronique séparé d'une partie formant capteur intégrant au moins un ou des capteurs configurés pour assurer un suivi échantillonné d'une rotation de l'aimant.

La partie formant capteur peut en outre comporter des capteurs dédiés à d'autres fonctions que le suivi de la rotation de l'aimant d'un compteur.

On prévoit également pour le dispositif de télé relève un écran de protection magnétique en matériau absorbant par exemple de type Ferrite qui serait collé sur le capteur, afin d'immuniser le ou les capteurs contre des parasites magnétiques ambiants.

L'invention a également pour objet un procédé de télérelève de compteur, selon lequel on met en oeuvre sur un signal échantillonné obtenu à partir de la ou des sorties d'au moins un capteur d'un dispositif du type précité un traitement de suivi de la rotation d'un aimant intégré à une roue d'un totalisateur mécanique d'un compteur.

Notamment, lorsque le capteur est un magnétomètre, on met en oeuvre sur un signal obtenu de celui-ci un traitement de compensation et de filtrage.

En variante, la période d'échantillonnage du signal échantillonné est égale à n*20+10 ms avec n un entier.

Egalement, dans un autre mode de mise en oeuvre, on réalise sur le signal échantillonné au moins un test de cohérence.

Notamment par exemple, on compare le signal échantillonné ou un signal issu de celui-ci à un volume de validation.

Dans un mode de mise en oeuvre, le volume de validation est un volume prédéterminé, avantageusement un tore prédéterminé.

En variante, le volume de validation est stocké sous la forme d'un tableau.

Dans un autre mode de mise en oeuvre, le volume de validation est déterminé par un processus d'auto calibration qui réalise un auto-apprentissage des caractéristiques magnétiques sur au moins un tour complet de la roue codeuse aimantée.

Dans un autre mode de mise en oeuvre, le volume de validation est initialement prédéterminé, puis précisé en mettant en oeuvre un processus d'autocalibration.

En variante, au moins un test de cohérence comprend la comparaison de la norme du signal échantillonné à des seuils définis en fonction de valeurs minimale et maximale dudit signal acquises par un processus d'auto-calibration.

En outre, dans une variante de mise en oeuvre possible, on analyse le signal échantillonné ou un signal issu de celui-ci pour déduire le cas échéant de l'évolution dudit signal une éventuelle signature caractéristique d'un dysfonctionnement.

Par ailleurs également, le compteur peut être un compteur mécanique initialement non pourvu d'un aimant, que l'on modifie avant l'installation ou auquel on adjoint une pièce magnétique mobile sur le terrain au moyen d'un outil adapté.

Dans une variante de mise en oeuvre possible, on détermine au moins une marge de fonctionnement correspondant à l'écart entre une valeur extrémale du champ magnétique auquel est soumis au moins un capteur bistable et un seuil de basculement dudit au moins un capteur bistable. Ladite au moins une marge de fonctionnement peut être déterminée durant le fonctionnement du compteur à partir de valeurs mesurées par le magnétomètre et d'une mesure dudit seuil de basculement. Ladite au moins une marge de fonctionnement peut également être déterminée lorsque le compteur est à l'arrêt à partir d'au moins une valeur mesurée par le magnétomètre et d'une valeur prédéterminé dudit seuil de basculement.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 représente schématiquement un compteur équipé d'un dispositif de télémesure ;
- les figures 2A et 2B illustrent comparativement une mesure effectuée par un magnétomètre 3D, ainsi que le basculement d'un capteur bistable lors d'une rotation de l'aimant de la roue unité d'un totalisateur mécanique ;
- la figure 3 illustre différentes étapes de traitement d'un exemple de mise en oeuvre de l'invention mise en cadre ;
- les figures 4A à 4F illustrent différents types de signatures qui peuvent être relevées lors de la mise en oeuvre de tests de cohérence ;
- la figure 5 illustre une méthode de calibration par discrétisation parallélépipèdique ;
- la figure 6 représente un procédé de compression de type « run length encoding » ;
- les figures 7, 8 et 9 illustrent des exemples de volume de validation exprimé dans un repère sphérique ;
- la figure 10 illustre un processus d'autocalibration global selon un mode de mise en oeuvre de l'invention ;
- les figures 10A à 10D illustrent un exemple de processus d'autocalibration selon un mode de mise en oeuvre de l'invention ;
- les figures 11A et 11B illustrent un exemple de processus de comptage selon un mode de mise en oeuvre de l'invention ;
- la figure 12 illustre un autre mode de réalisation possible pour un dispositif de télérelève conforme à l'invention ;
- la figure 13 illustre encore un autre mode de réalisation possible pour un dispositif de télérelève conforme à l'invention ;
- la figure 14 illustre un arrangement possible des capteurs du dispositif de télérelève selon l'invention, adapté au calcul d'une marge de fonctionnement
- la figure 15 illustre un exemple de calcul d'une marge de fonctionnement selon un mode de mise en oeuvre de l'invention.

## EXEMPLES DE MODES DE RÉALISATION ET DE MISES EN OEUVRE

La structure générale d'un dispositif de télémesure conforme à un mode de réalisation possible peut être du type de celle décrite en référence à la figure 1.

Le capteur d'impulsions 2 y est cependant remplacé par un capteur qui n'est pas un bistable qui émet des impulsions de basculement, mais est un magnétomètre qui permet une mesure de champ magnétique.

Un tel capteur est par exemple un capteur magnétomètre 3D ayant une sensibilité de l'ordre du micro Tesla ou inférieur.

De tels capteurs sont par exemple ceux classiquement utilisés pour réaliser la fonction boussole de certains PDA (Le composant Asahi Kasei AK 8975 utilisé dans les Smartphones par exemple). Ils sont de structures à base de technologies silicium et peuvent typiquement avoir des sensibilités de 0,3 micro Tesla pour des excursions d'aimantations de 1000 micro Tesla.

Comme on l'aura compris, un tel capteur 2 permet de mesurer en permanence le champ magnétique de l'aimant A.

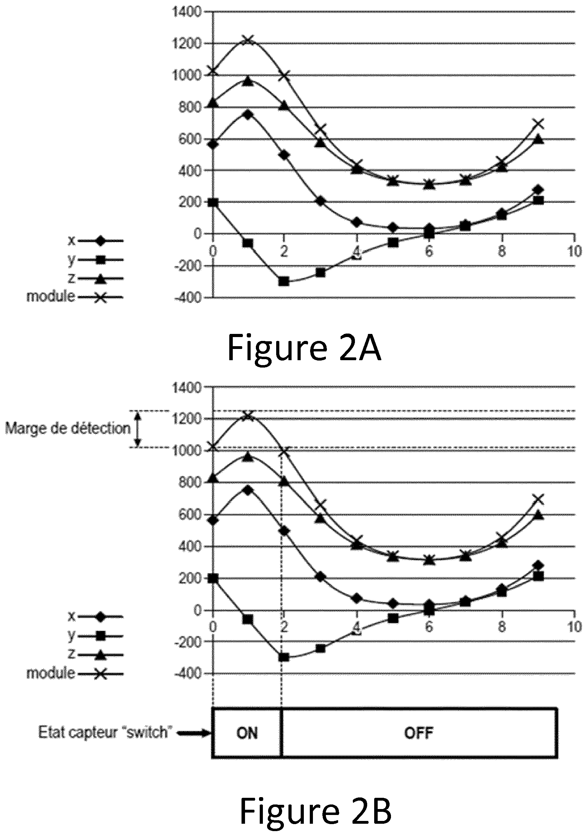

Lors d'une rotation de la roue qui porte l'aimant A, la mesure réalisée un capteur magnétomètre est du type illustré sur la figure 2a (décomposition sur les trois axes et valeur de module).

Comme le montre en comparaison la figure 2b, cette mesure porte beaucoup plus d'informations que la seule information que donnerait ON / OFF un capteur bistable (interrupteur magnéto-résistif / ampoule de Reed) calibré pour détecter le passage de l'aimant au point le plus proche du capteur dans une direction donnée (en l'occurrence, capteur orienté pour une détection de ce passage selon l'axe X - calibration du basculement à 1000 micro Tesla).

La mesure ainsi réalisée (figure 2a) fait l'objet d'un traitement afin d'en déduire différentes informations sur le fonctionnement du dispositif de télérelève et du compteur.

A cet effet, par exemple, l'électronique 3 du boîtier 1 comporte un microprocesseur qui met en oeuvre sur le signal du capteur 2 un certain nombre de traitements.

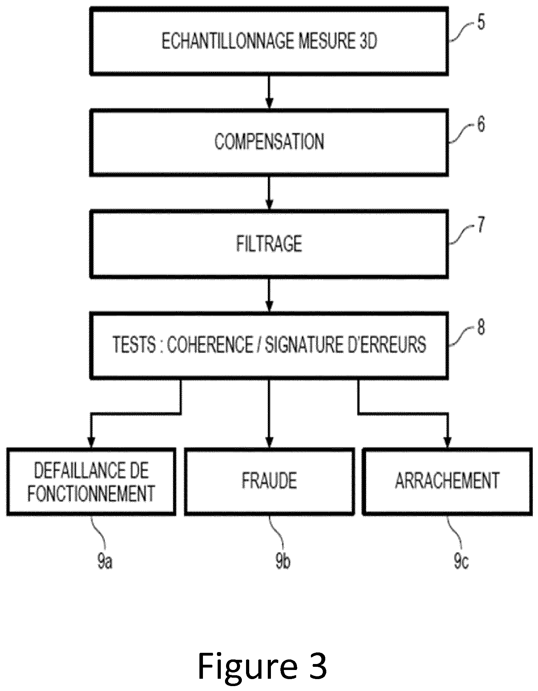

Notamment, ainsi qu'illustré sur la figure 3, elle échantillonne le champ magnétique dans le temps (étape 5).

Le signal numérique ainsi obtenu fait ensuite l'objet d'une compensation (étape 6) et d'un filtrage (étape 7) pour compenser le champ magnétique terrestre et supprimer les bruits magnétiques parasites.

Des tests de cohérence (étape 8) sont ensuite mis en oeuvre sur ces signaux. Ces tests comparent par exemple le vecteur 3D mesuré à des seuils caractéristiques de différentes étapes de fonctionnement.

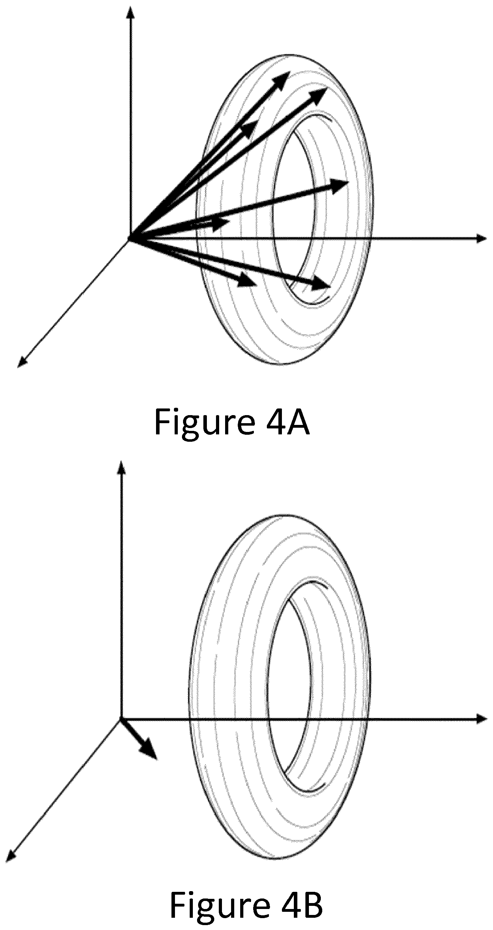

En fonctionnement et si le couplage entre l'aimant A et le capteur 2 est satisfaisant, la pointe du vecteur mesuré va décrire, au fur et à mesure de la rotation de la roue unité du totalisateur mécanique TM, une trajectoire dans un volume de validation préférentiellement torique. Un test de cohérence possible consiste à vérifier que cette trajectoire s'inscrit bien dans un volume de validation, avantageusement un tore de validation (figure 4a) défini autour d'une trajectoire médiane attendue caractéristique d'un bon fonctionnement et d'une qualité de mesure satisfaisante.

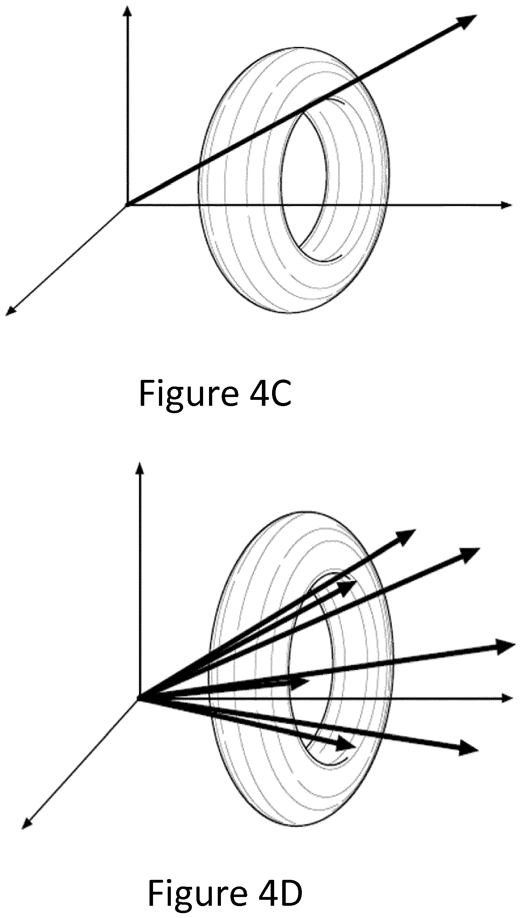

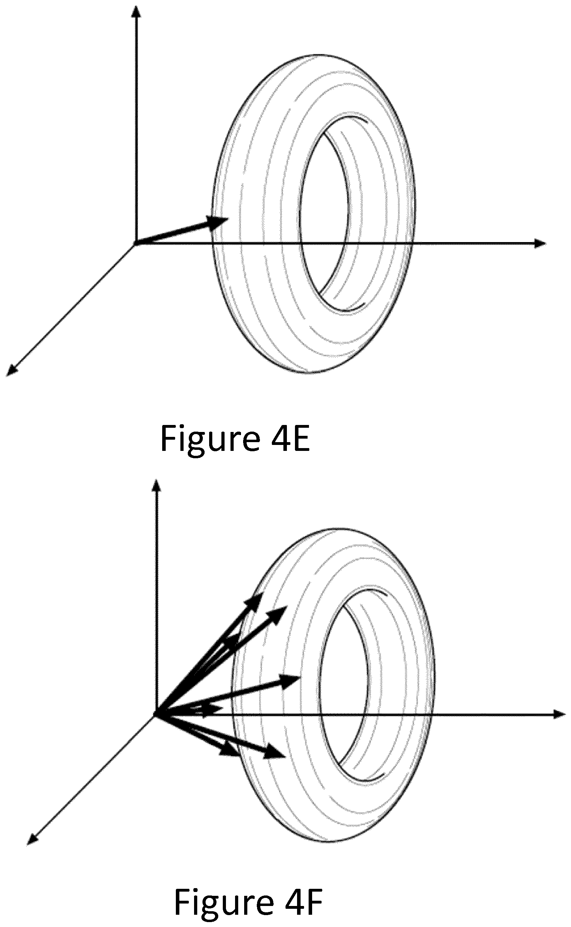

Par ailleurs, en cas de déviation par rapport au volume de validation ou plus généralement aux seuils de validation, les traitements mis en oeuvre caractérisent le disfonctionnement constaté en identifiant le cas échéant sur les évolutions de mesures de champ constatées des signatures caractéristiques par exemple d'une défaillance de fonctionnement 9a (défaillance de l'aimant, défaillance de la source d'alimentation du dispositif de télérelève, etc.), ou encore d'un arrachement 9c du dispositif de télérelève ou d'une tentative de fraude 9b au moyen d'un aimant approché du compteur C et du dispositif de télérelève. Par exemple, une disparition brutale du signal de mesure de champ sera considérée comme caractéristique d'un arrachement (figure 4b) ; une augmentation brutale sera quant à elle considérée comme caractéristique d'une tentative de fraude par l'approche d'un aimant (figure 4c) ; des variations plus ou moins en dehors du volume de validation, mais dans un voisinage des limites de celui-ci seront quant à elles le cas échéant caractéristiques d'un mauvais positionnement du capteur (mauvais positionnement angulaire, décollement, etc.) (figure 4d) ; une mesure fixe dans le volume de validation sera caractéristique du fait que l'ensemble fonctionne, mais que le compteur est à l'arrêt (figure 4e) ; une diminution du signal mesuré par rapport au volume de validation attendu pourra quant à elle être considérée comme caractéristique d'une défaillance de la source d'alimentation du dispositif de télérelève ou encore comme une perte d'aimantation de l'aimant (figure 4f).

Les dysfonctionnements ainsi détectés font l'objet de l'émission d'un signal d'alerte vers le centre de gestion du parc de compteurs et de dispositifs de télérelève.

Bien entendu, les différents traitements de compensation, filtrage et de tests de cohérence des étapes 6 à 8 peuvent être mis en oeuvre au niveau d'un serveur de traitement à distance du dispositif de télérelève (« cloud »).

Dans le cas de dispositifs de télérelève autonome quant à leur alimentation, ceci permet de préserver la source d'alimentation de ces dispositifs et d'assurer un fonctionnement sur de longues durées pour le dispositif de télérelève (plusieurs dizaines d'années).

Le microprocesseur de l'électronique 3 assure alors principalement l'échantillonnage des mesures, la mémorisation des valeurs mesurées et le déclenchement de leur transmission à distance.

La fréquence d'échantillonnage est par exemple de 8Hz.

Selon une variante les valeurs de champ magnétique sont échantillonnées avec une période T=n*20+10 ms, n entier. Une telle fréquence d'échantillonnage permet d'obtenir que le champ magnétique induit par un courant alternatif à 50 Hz dans deux échantillons successifs soit en opposition de phase. En retenant comme mesure la moyenne de deux valeurs échantillonnées successives, on peut ainsi annuler l'influence du champ magnétique parasite induit par le courant à 50 Hz sur les valeurs mesurées.

Le serveur à distance déduit alors du suivi de l'évolution de la mesure 3D ainsi réalisée (trajectoire toroïdale évoquée ci-dessus) le nombre de tours de la roue unité du totalisateur mécanique TM.

Le volume de validation peut être un volume prédéterminé ou déterminé par un processus d'autocalibration. L'utilisation d'un volume prédéterminé permet de valider le fonctionnement du compteur dès sa mise en service sans nécessiter un calibrage préalable et de déterminer également dès la mise en service un éventuel dysfonctionnement, éventuellement frauduleux, tel que l'arrachement du dispositif de télérelève ou une tentative de fraude utilisant un aimant. L'utilisation d'un processus d'auto-calibration permet de réaliser un auto-apprentissage des caractéristiques magnétiques de la roue codeuse aimantée sur un tour complet et donc de déterminer un volume de validation de plus en plus précis lors de la réalisation des tours de roue du compteur. En variante, un volume prédéterminé peut être utilisé initialement, puis précisé lors de la réalisation de tours de roue par le compteur en mettant en oeuvre un processus d'autocalibration. Un volume prédéterminé pour l'ensemble des compteurs d'un même type peut par exemple être utilisé dès la mise en service du compteur, puis ce volume peut être affiné in situ par une des méthodes décrites ci-dessous. Cette variante permet de combiner les avantages donnés ci-dessus.

Un faisceau de courbes de mesure peut être utilisé aussi bien pour la prédétermination d'un volume de validation commun à une série de compteurs que pour la détermination d'un tel volume dans un processus d'autocalibration. Un tel ensemble de courbes peut être utilisé pour tenir compte de la variabilité des mesures de champ magnétique due aux tolérances existantes quant au positionnement du capteur et à l'aimantation de l'aimant ainsi qu'aux autres tolérances mécaniques du système.

Dans un premier mode de réalisation le volume de validation est un volume prédéterminé, avantageusement un tore de validation prédéterminé. Avantageusement, le volume de validation a été prédéterminé en fonction de la marque et du modèle du compteur. Un tel volume de validation peut avoir été déterminé par l'application à un compteur de même modèle d'un des processus d'auto-calibration décrits ci-après. Un installateur du compteur disposant d'un terminal mobile, du type PDA ou smartphone, peut saisir sur celui-ci la marque et le modèle d'un compteur à installer. En fonction de la marque et du modèle saisis, le volume de validation associé au compteur à installer est déterminé et transmis par une liaison, par exemple sans fil de type NFC, au dispositif de télérelève.

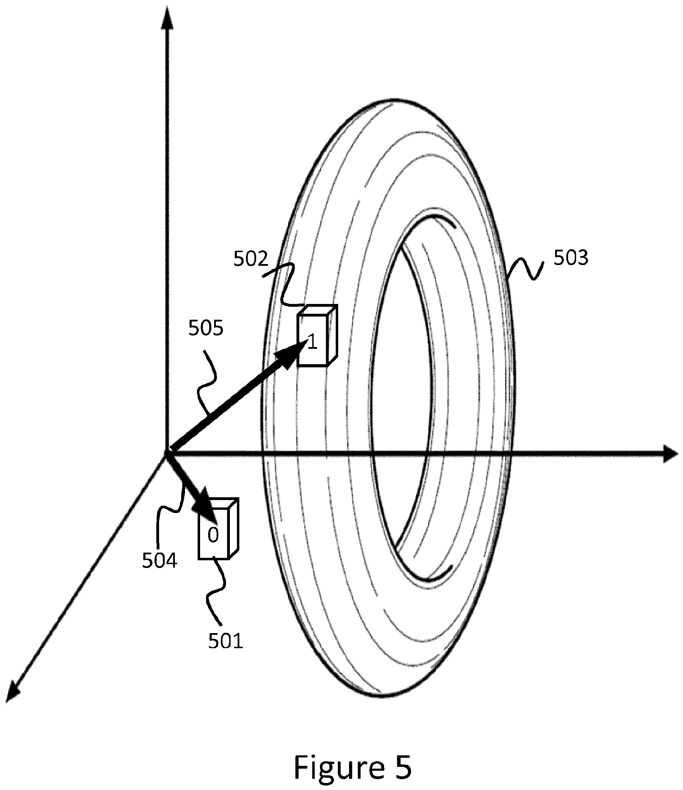

Ledit volume de validation peut être transmis sous la forme d'un tableau, par exemple binaire, éventuellement sous forme compressée. Un tel tableau T peut être déterminé par une méthode dénommée par la suite méthode de discrétisation parallélépipèdique illustrée en Figure 5 selon laquelle l'espace est discrétisé en un ensemble de parallélépipèdes $C_{i,j,k}$ 501, 502. Le coefficient $T_{i,j,k}$ est égal à « 1 » s'il existe une intersection entre le cube $C_{i,j,k}$ et le volume de validation 503, et est égal à « 0 » sinon. En variante, le coefficient $T_{i,j,k}$ est égal à 1 uniquement si le cube $C_{i,j,k}$ est inclus dans le volume de validation. La taille minimale des cubes est limitée par l'espace mémoire total disponible. Un tel tableau peut être prédéterminé à l'aide de mesures sur un compteur réel ou bien par simulation, par exemple en mettant en oeuvre un algorithme tel que l'algorithme 1 décrit en Annexe 1.

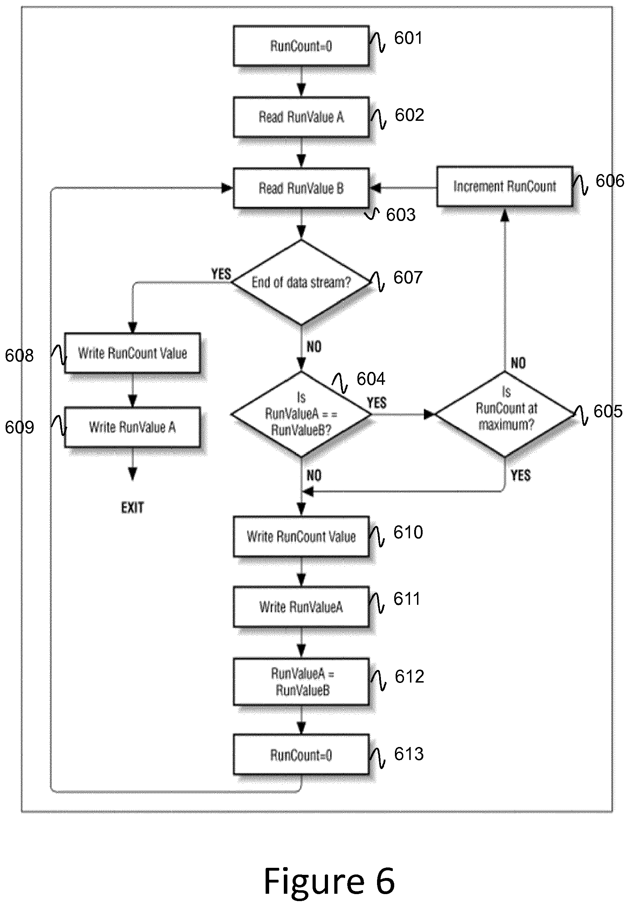

Avantageusement, un tel tableau binaire peut être compressé par exemple par une compression du type « run length encoding » telle que représentée en Figure 6. Un tel algorithme permet de remplacer une succession de symboles binaires identiques par une occurrence de ce symbole binaire accolée au nombre de répétitions de ce symbole. Après une initialisation lors d'une première étape E601 et d'une deuxième étape E602, le symbole courant est lu lors d'une troisième étape E603. Si le symbole courant est déterminé égal au précédent lors d'une quatrième étape E604 et s'il est déterminé lors d'une cinquième étape E605 que le nombre de répétitions déjà constaté n'atteint pas le nombre maximal de répétitions encodable sur un symbole, le nombre de répétitions comptabilisé est incrémenté lors d'une sixième étape E606. Si le symbole courant est différent du symbole précédent, ou si le nombre maximal de répétitions encodable a été atteint ou si la fin de la série de symboles est atteinte lors d'une septième étape E607, le nombre de répétitions comptabilisées et la valeur de symbole répétée sont écrits lors de huitième, neuvième, dixième et onzième étapes E608, E609, E610 et E611. Une fois ces valeurs écrites, si la fin de la série de données n'a pas été atteinte, la valeur courante est mémorisée lors d'une douzième étape E612 et le nombre de répétitions comptabilisé est remis à zéro lors d'une treizième étape E613.

Un tel tableau permet de déterminer comme illustré en Figure 5 si un vecteur de champ magnétique mesuré 504, 505 appartient au volume de validation avec un temps de calcul réduit. En effet si l'extrémité d'un tel vecteur appartient à un cube auquel est associé dans le tableau un coefficient égal à 1, alors l'extrémité du vecteur appartient bien au volume de validation, et le test de cohérence associé est alors vérifié pour le vecteur de champ magnétique mesuré. Une telle appartenance peut être testée par un algorithme tel que l'algorithme 2 décrit en annexe 1.

Une telle discrétisation peut employer des parallélépipèdes de très petite taille pour améliorer la fiabilité de la détermination pour des champs magnétiques de faible intensité. Selon une variante la taille des parallélépipèdes employés peut varier, par exemple de manière logarithmique, en fonction de leurs coordonnées de façon à discrétiser plus finement l'espace dans les zones de celui-ci correspondant aux champs magnétiques mesurés les plus faibles.

Selon un deuxième mode de réalisation, le volume de validation n'est pas prédéterminé mais est déterminé par un processus d'auto-calibration. Un ensemble de mesures de vecteur de champ magnétique sont acquises durant une première phase de fonctionnement du compteur. Avantageusement, cette première phase correspond à un ou plusieurs tours du compteur afin que les extrémités des vecteurs mesurés soient réparties le long d'un parcours fermé, résultant en un faisceau de courbes de mesure permettant de prendre en compte les tolérances citées ci-dessus.

Afin d'acquérir un ensemble de vecteurs mesurés dont les extrémités parcourent un contour fermé, une méthode utilisant la phase des vecteurs mesurés peut être utilisée selon laquelle une mesure est acquise à intervalle de phase régulier jusqu'à ce que le compteur ait fait un tour, c'est-à-dire, jusqu'à ce que l'écart en valeur absolue entre la phase du vecteur mesuré et la phase du vecteur correspondant à la première mesure soit inférieur à un seuil prédéterminé ou jusqu'à ce que ce que le module de la différence entre le vecteur mesuré et le vecteur correspondant à la première mesure soit inférieur à un autre seuil prédéterminé.

Selon une première variante, la méthode de discrétisation parallélépipèdique décrite ci-dessus est appliquée à l'ensemble des points de mesure dudit faisceau de courbes. Un coefficient égal à 1 est associé à tous les cubes dans lesquels se trouve l'extrémité d'au moins un vecteur de mesure.

Selon une deuxième variante, un contour fermé parcouru est déterminé à partir des points de mesure. Ces points de mesure peuvent appartenir à l'ensemble des courbes du faisceau de courbe décrit ci-dessus de façon à prendre en compte l'ensemble des tolérances citées ci-dessus. Avantageusement de nouveaux points de mesure supplémentaires sont utilisés pour décrire le contour jusqu'à ce que chaque point de mesure soit distant de son voisin de moins d'une distance minimale epsilon. Epsilon peut par exemple être fixé à une valeur deux fois inférieure à l'erreur attendue. Une table des points utilisés pour décrire le contour peut être complétée pour chaque nouveau point de mesure en incluant dans la table la distance vectorielle du nouveau point avec tous les autres points de la table. A chaque ajout d'un nouveau point dans la table, la distance maximale entre deux points voisins parmi tous les points de la table est calculée et comparée à Epsilon.

Un volume de validation est ensuite défini à partir de ce contour fermé, ledit volume englobant le contour afin que le volume englobe chaque extrémité des vecteurs de champ magnétique mesurés additionnée d'une incertitude de mesure prédéterminée. Un tel volume englobant peut ainsi être l'union de volumes locaux englobant chaque point de mesure. Un tel volume local englobant chaque point de mesure peut être un volume sphérique. Le rayon des volumes locaux peut être adapté de façon à ce que l'union des volumes locaux constitue un volume plein.

L'appartenance d'une mesure de champ magnétique au volume de validation est ensuite déterminée de la façon suivante. Le point de la table des points décrivant le contour de validation le plus proche de l'extrémité du vecteur mesuré est déterminé. Pour ce faire la distance entre le point mesuré et chacun des points de la table est déterminée, et le point de la table présentant la distance minimale est retenue. La distance minimale déterminée est ensuite retenue et comparée au rayon du volume local englobant constituant le volume de validation autour du contour fermé. Le vecteur mesuré appartient au volume de validation si la distance minimale est inférieure au rayon du volume local englobant.

En variante un tel volume englobant est mémorisé sous la forme d'un contour fermé médian à l'ensemble des courbes du faisceau de courbes, additionné d'un volume englobant union de volumes englobants locaux sphériques, englobant lui-même l'ensemble du faisceau de courbes.

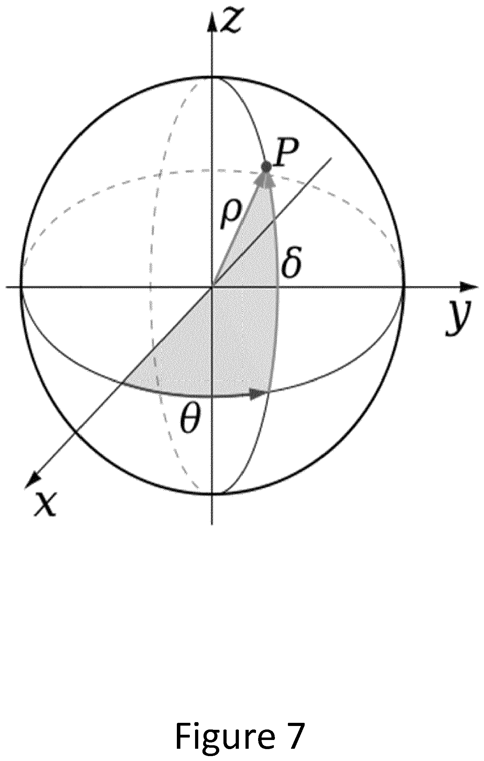

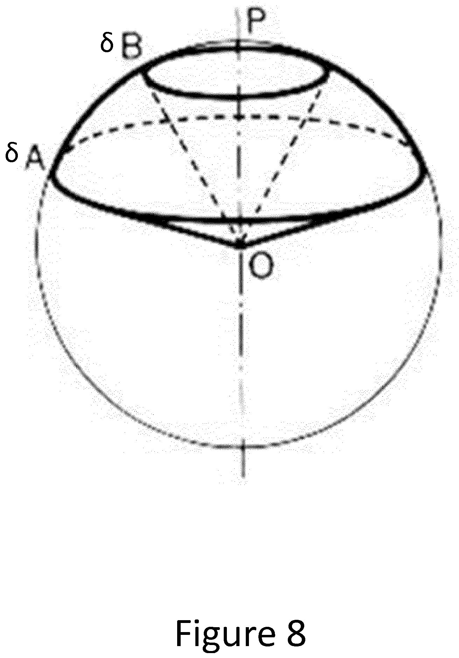

Selon une troisième variante, le processus d'auto-calibration détermine le volume de validation comme une sphère ou une portion de sphère centrée sur un centre de symétrie de l'ensemble des points de mesure du champ magnétique. Un tel processus détermine tout d'abord les valeurs maximale et minimale des coordonnées de l'ensemble des points de mesure selon les trois axes x, y et z d'un repère local au capteur. Ensuite le centre de symétrie des points de mesure, noté O, est déterminé comme le point dont les coordonnées sont les moyennes des valeurs minimale et maximale déterminées ci-dessus selon chacun des axes. Les coordonnées de chacun des points de mesure sont ensuite calculées dans un repère sphérique centré sur le point O. Avantageusement l'axe z du nouveau repère est choisi de manière à ce que le parcours du champ magnétique soit le plus possible autour de l'équateur d'une sphère centrée en O. Le volume de validation est alors défini comme le volume borné par les valeurs minimale et maximale des coordonnées rho, teta et delta de l'ensemble des points de mesure exprimées dans le repère sphérique centré sur O, comme représenté en Figure 7. Un exemple selon lequel rho_min=0, teta varie de 0 à 2*Pi et delta varie entre $\delta A$ et $\delta B$ est représenté en Figure 8.

L'appartenance d'un vecteur de mesure au volume de validation est alors déterminée en calculant les coordonnées de ce vecteur exprimées dans le nouveau repère centré sur O puis en déterminant si ces coordonnées sont comprises dans les intervalles des valeurs minimale et maximale des coordonnées rho $\rho$, teta $\theta$ et delta $\delta$ bornant le volume de validation.

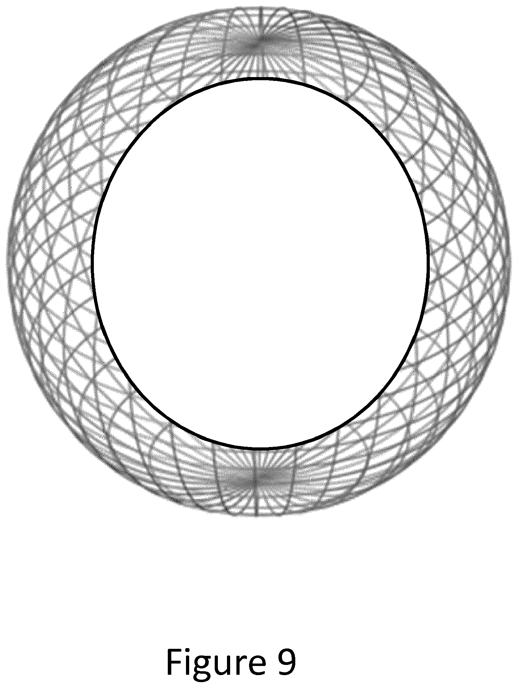

En variante, le volume de validation retenu est symétrique en teta et en delta autour du point O. Le volume de validation est alors le volume compris entre deux sphères centrées sur O de rayons rho_min et rho_max comme représenté en Figure 9. Le processus d'auto-calibration détermine alors uniquement les valeurs minimale et maximale de l'ensemble des modules des vecteurs de mesure exprimés dans le nouveau repère centré sur O. Un tel volume de validation, dit « sphère creuse », constitue une des descriptions les plus compactes permettant de détecter la fraude par arrachement et par utilisation d'un champ magnétique additionnel. L'appartenance d'un point de mesure à un tel volume de validation consiste alors uniquement à déterminer les coordonnées du point dans le nouveau repère centré en O, à déterminer le module du vecteur de ces coordonnées et à vérifier si ledit module est compris entre rho_min et rho_max.

Selon une autre variante, le volume de validation employé n'est ni un tore ni une partie de sphère. Dans le cas d'un volume parallélépipédique, le processus d'auto-calibration détermine simplement les valeurs minimales et maximales des composantes des vecteurs de champ magnétique mesurés afin de définir un volume parallélépipédique englobant.

Comme indiqué ci-dessus, un volume prédéterminé obtenu par l'application à un compteur de même modèle d'un des processus d'auto-calibration décrits ci-dessus peut être utilisé initialement, puis précisé lors de la réalisation de tours de roue par le compteur en mettant en oeuvre un processus d'autocalibration. Par exemple, il est possible d'utiliser initialement un volume de validation consistant en une « sphère creuse » obtenue par le processus correspondant décrit-ci-dessus, puis d'affiner le volume de validation à l'aide de la méthode de discrétisation parallélépipédique décrite ci-dessus ou bien en déterminant comme volume de validation un contour fermé additionné d'un volume englobant.

Selon un troisième mode de réalisation, aucun volume de validation n'est déterminé ou prédéterminé. Un processus d'auto-calibration réalisant un auto-apprentissage des caractéristiques magnétiques sur un tour complet de la roue codeuse aimantée est mis en oeuvre. Au cours d'un tel processus d'auto-calibration, les valeurs maximum des modules des composantes des vecteurs de champ magnétique mesuré sont enregistrées au cours d'un premier tour de la roue unité du compteur. Les valeurs minimale et maximale, respectivement Bmin et Bmax, de la norme du champ magnétique mesuré qui peut s'exprimer sous la forme Bn=Racine carrée(Bxn*Bxn+Byn*Byn+Bzn*Bzn), avec Bxn, Byn et Bzn les mesures de champs magnétiques échantillonnés selon les trois axes x, y et z, ainsi que l'axe sur lequel le champ magnétique présente le plus petit module maximal, dit axe faible, sont également enregistrés. La moyenne des valeurs minimum et maximum des normes des vecteurs de champ magnétique est appelée moyenne de calibration. Différentes phases du mouvement du compteur sont déterminées en fonction du sens de variation montant ou descendant du module du champ magnétique afin de détecter l'accomplissement d'un tour complet par le compteur. Selon une variante, le processus d'auto-calibration est mis en oeuvre à partir de valeurs échantillonnées filtrées, par exemple à l'aide d'un filtrage passe-bas du type filtre de Butterworth du premier ordre, appliqué de manière préférentielle à chacune des composantes de champ magnétique mesurées.

Avantageusement, différents tests de cohérence sont réalisés sur les valeurs mesurées au cours du processus d'auto-calibration afin de détecter une éventuelle anomalie magnétique et de déclencher une alerte le cas échéant.

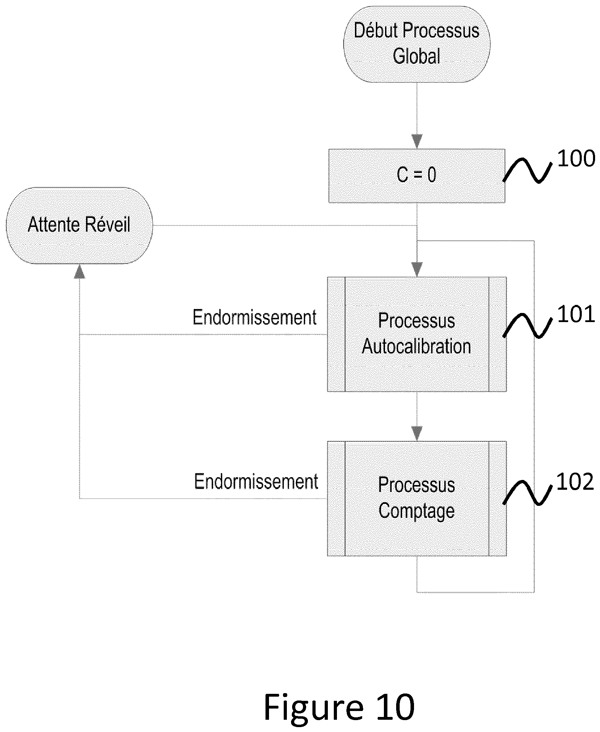

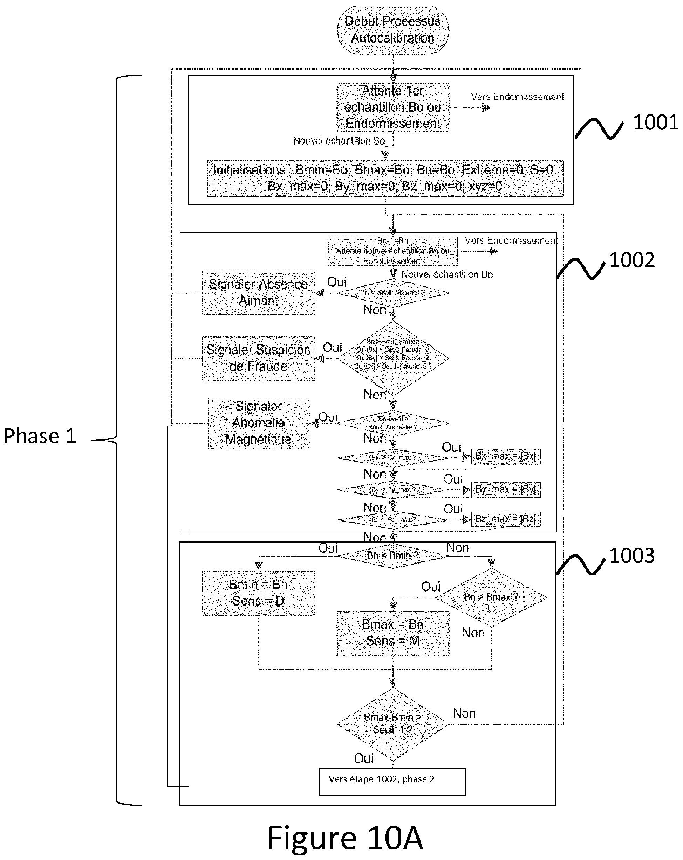

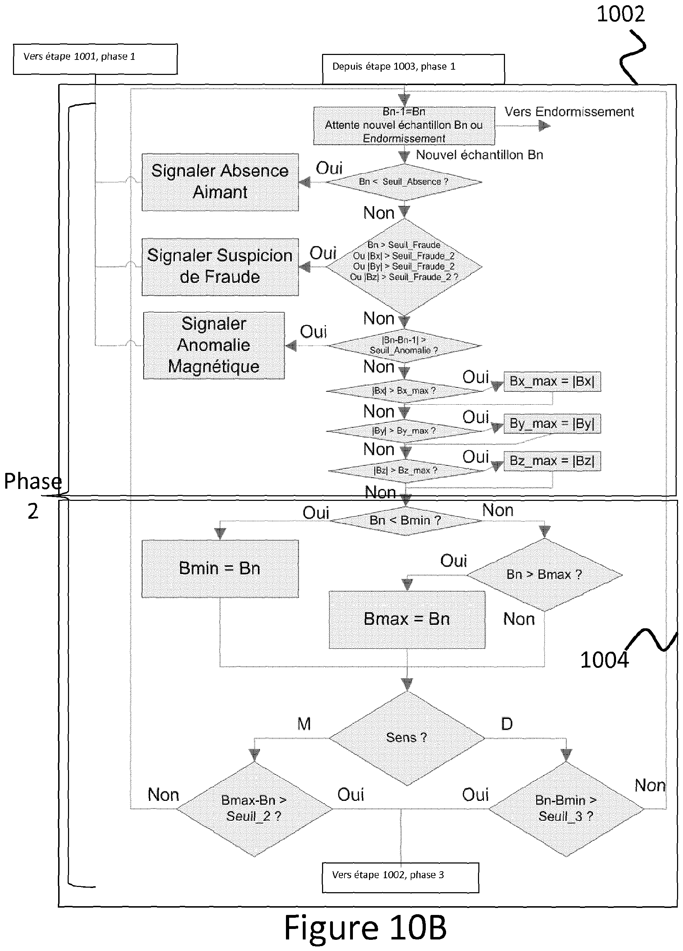

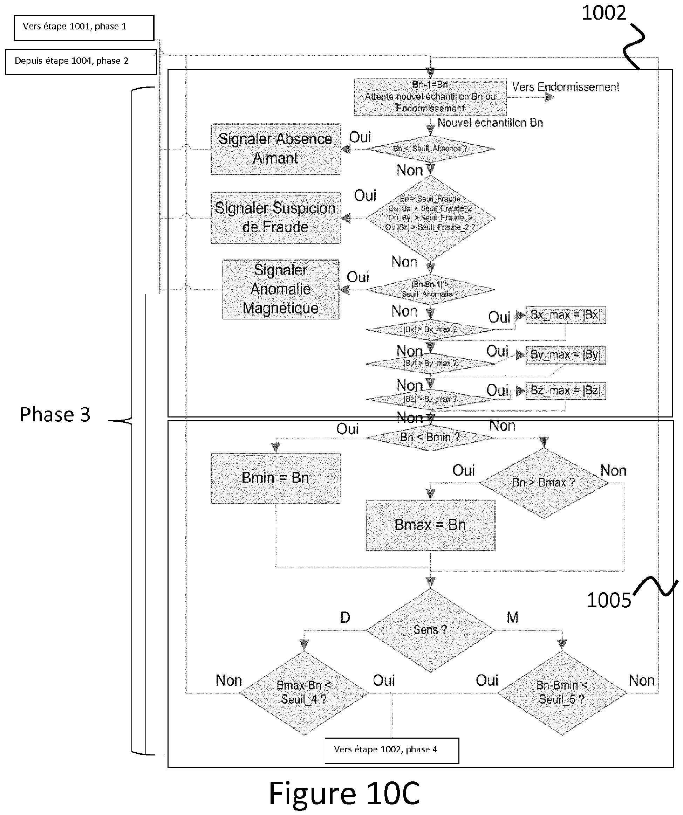

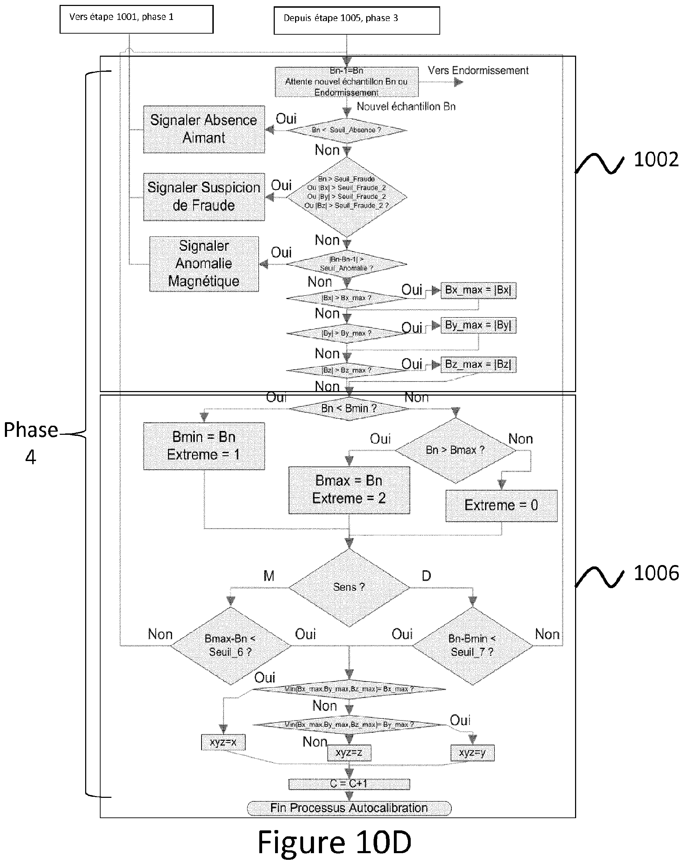

Le processus d'autocalibration global est illustré en Figure 10. Ce processus débute par une étape 100 d'initialisation à 0 du compteur de tours de la roue codeuse portant l'aimant C puis se poursuit par la mise en oeuvre d'une boucle comprenant l'exécution du processus d'auto-calibration lors d'une étape 101 et du processus de comptage lors d'une étape 102. Avantageusement, un contrôleur externe peut commander l'endormissement et le réveil de chacun de ces processus. La commande d'endormissement est vérifiée lors de l'attente des nouveaux échantillons dans chacune des phases des différents processus.

Selon un mode de réalisation décrit en Figures 10a à 10d, le processus d'auto-calibration est découpé en quatre phases successives. La phase 1 débute avec une étape d'initialisation 1001 suivie d'une étape 1002. Les autres phases débutent toutes par une étape 1002. Dans chacune des phases, à l'issue de l'étape 1002, des tests supplémentaires sont réalisés lors d'étapes respectivement notées 1003 pour la phase 1, 1004 pour la phase 2, 1005 pour la phase 3 et 1006 pour la phase 4 au cours desquels on détermine si la variable Bn représentant la norme de l'échantillon courant du vecteur de champ magnétique, est une nouvelle valeur minimale ou maximale du champ magnétique et si la variable Bn vérifie les conditions pour que le processus passe à la phase suivante.

Plus précisément, lors de l'étape 1001 un premier échantillon du champ magnétique est acquis sur les trois axes. Le module Bo de ce premier échantillon est enregistré. Les variables Bmin et Bmax sont initialisées à la valeur Bo, ainsi que la variable Bn représentant la norme de l'échantillon courant du vecteur de champ magnétique. Des variables Extreme, S, xyz et Bx_max, By_max, Bz_max sont initialisées à zéro. La variable Extreme est utilisée par la suite pour la détection d'une anomalie magnétique lorsque deux mesures de modules consécutives correspondent pour l'une d'elles à un nouveau minimum, et pour l'autre à un nouveau maximum. La variable S est utilisée par la suite pour détecter une anomalie magnétique lorsque la courbe de module a des variations erratiques, par exemple quand la courbe du module est passée par la moyenne de calibration dans un sens et refranchit cette valeur dans l'autre sens, sans s'être approché respectivement d'une valeur maximum alors que la courbe était en phase montante ou d'une valeur minimum alors que la courbe était en phase descendante. xyz sert à mémoriser l'axe faible parmi les trois axes x, y ou z. Les variables Bx_max, By_max et Bz_max servent à mémoriser la valeur maximale de la valeur absolue des mesures de chacun des trois axes.

A chaque mise en oeuvre de l'étape 1002, un échantillonnage du champ magnétique selon les trois axes x, y et z, et les traitements suivants sont réalisés :

L'ancienne valeur courante Bn est mémorisée dans une variable Bn-1 et une nouvelle valeur de Bn est acquise.

Si la variable Bn est inférieure à un seuil noté Seuil-Absence, une absence d'aimant est signalé et le processus d'auto-calibration est réinitialisé.

Si la variable Bn est supérieure à un seuil noté Seuil_Fraude ou le module d'une des composantes |Bx|, |By| ou |Bz| est supérieur à un seuil noté Seuil_Fraude_2, une suspicion de fraude est signalée et le processus d'auto-calibration est réinitialisé.

Si le module |Bn - Bn-1| est supérieur à un seuil noté Seuil_Anomalie, une anomalie magnétique est signalée et le processus d'auto-calibration est réinitialisé.

Si aucune absence, fraude ou anomalie n'est détectée, on vérifie si la composante du champ magnétique mesuré sur chaque axe présente un module supérieur à la valeur maximale enregistrée pour l'axe correspondant.

De plus, si le module |Bx| est supérieur à la variable Bx_max alors le module |Bx| est mémorisé dans la variable Bx_max,

Si le module |By| est supérieur à la variable By_max alors le module |By| est mémorisé dans la variable By_max et,

Si le module |Bz| est supérieur à la variable Bz_max alors le module |Bz| est mémorisé dans la variable Bz_max.

Lors de l'étape 1003 :

Lorsque la variable Bn est inférieure à la variable Bmin, la variable Bn est mémorisée dans la variable Bmin et une variable Sens est initialisée à la valeur D pour indiquer un sens descendant.

Lorsque la variable Bn est supérieure à la variable Bmax, la variable Bn est mémorisée dans la variable Bmax et la variable Sens est initialisée à M pour indiquer un sens montant.

Le processus passe de la phase 1 à l'étape 1002 de la phase 2 quand Bmax-Bmin est supérieur à un seuil noté Seuil_1. Ainsi, il faut que la roue unité du compteur ait suffisamment bougé pour que le processus d'auto-calibration sorte de la phase 1 et passe ainsi à la phase 2. De plus, la variable Sens, qui indique si le dernier extremum atteint est une valeur minimale ou maximale, donne le sens de variation du module du champ.

A l'issue de l'étape 1003, si le processus ne sort pas de la phase 1, il retourne à l'étape 1002 de la phase 1.

Lors de l'étape 1004 de la phase 2 :

Lorsque la variable Bn est inférieure à la variable Bmin, la variable Bn est mémorisée dans la variable Bmin.

Lorsque la variable Bn est supérieure à la variable Bmax, la variable Bn est mémorisée dans la variable Bmax.

Le processus passe de la phase 2 à la phase 3 quand Bmax-Bn est supérieur à un seuil noté Seuil_2 si la variable Sens est égale à M, c'est-à-dire si on était dans le sens montant durant la phase 1, ou bien quand Bn-Bmin est supérieur à un seuil noté Seuil_3 si la variable Sens est égale à D, c'est à dire si on était dans le sens descendant dans la phase 1. Ainsi, pour passer à l'étape 1002 de la phase 3, il faut que la courbe du module du champ magnétique se soit suffisamment écartée d'une valeur maximale si on était dans le sens montant en phase 1, auquel cas le module du champ magnétique a donc changé de sens de variation, ou bien qu'elle se soit suffisamment écartée d'une valeur minimale si on était dans le sens descendant en phase 1, auquel cas le module du champ magnétique a donc également changé de sens de variation.

A l'issue de l'étape 1004, si le processus ne sort pas de la phase 2, il retourne à l'étape 1002 de la phase 2.

Lors de l'étape 1005 de la phase 3 :

Lorsque la variable Bn est inférieure à la variable Bmin, la variable Bn est mémorisée dans la variable Bmin.

Lorsque la variable Bn est supérieure à la variable Bmax, la variable Bn est mémorisée dans la variable Bmax.

Le processus passe de la phase 3 à l'étape 1002 de la phase 4 quand Bmax-Bn est inférieur à un seuil noté Seuil_4 si la variable Sens est égale à D, c'est-à-dire si on était dans le sens descendant dans la phase 1, ou bien quand Bn-Bmin est inférieur à un seuil noté Seuil_5 si la variable Sens est égale à M, c'est à dire si on était dans le sens montant dans la phase 1. Ainsi, pour passer en phase 4 il faut que la courbe du module du champ magnétique se soit suffisamment approchée d'une valeur maximale si on était dans le sens descendant en phase 1, ou bien qu'elle se soit suffisamment approchée d'une valeur minimale si on était dans le sens montant en phase 1.

A l'issue de l'étape 1005, si le processus ne sort pas de la phase 3, il retourne à l'étape 1002 de la phase 3.

Lors de l'étape 1006 de la phase 4 :

Lorsque la variable Bn est inférieure à la variable Bmin, la variable Bn est mémorisée dans la variable Bmin et la variable Extreme est initialisée à 1.

Lorsque la variable Bn est supérieure à la variable Bmax, la variable Bn est mémorisée dans la variable Bmax et la variable Extreme est initialisée à 2.

Lorsque la variable Bn est supérieure à la variable Bmin et inférieure à la variable Bmax, la variable Extreme est initialisée à 0.

Le processus sort de la phase 4 et prend fin quand Bmax-Bn est inférieur à un seuil noté Seuil_6 si on était dans le sens montant dans la phase 1, ou bien quand Bn-Bmin est inférieur à un seuil noté Seuil_7 si on était dans le sens descendant dans la phase 1. Ainsi, il faut que la courbe du module du champ magnétique se soit suffisamment approchée d'une valeur minimale si on était dans le sens descendant en phase 1, ou bien que la courbe du module du champ magnétique se soit suffisamment approchée d'une valeur maximale si on était dans le sens montant en phase 1. Si tel est le cas, la roue unité du compteur a fait un tour complet, et le processus d'auto-calibration se termine en incrémentant d'une unité le compteur de tours C, et en mémorisant dans la variable xyz la valeur x si x est l'axe faible, y si y est l'axe faible, ou z si z est l'axe faible.

Si à l'issue de cette étape 1006, le processus ne sort pas de la phase 4, il retourne à l'étape 1002 de la phase 4.

Le processus d'auto-calibration est suivi d'un processus de comptage au cours duquel la norme du vecteur de champ magnétique mesuré est comparée à différents seuils définis en fonction des valeurs minimale et maximale Bmin et Bmax déterminées au cours de l'auto-calibration pour déterminer les phases de rotation de la roue unité du compteur et donc pour compter le nombre de tour réalisés par cette roue.

Avantageusement, différents tests de cohérence sont réalisés sur les valeurs mesurées au cours du processus de comptage afin de détecter une éventuelle anomalie magnétique et de déclencher une alerte le cas échéant.

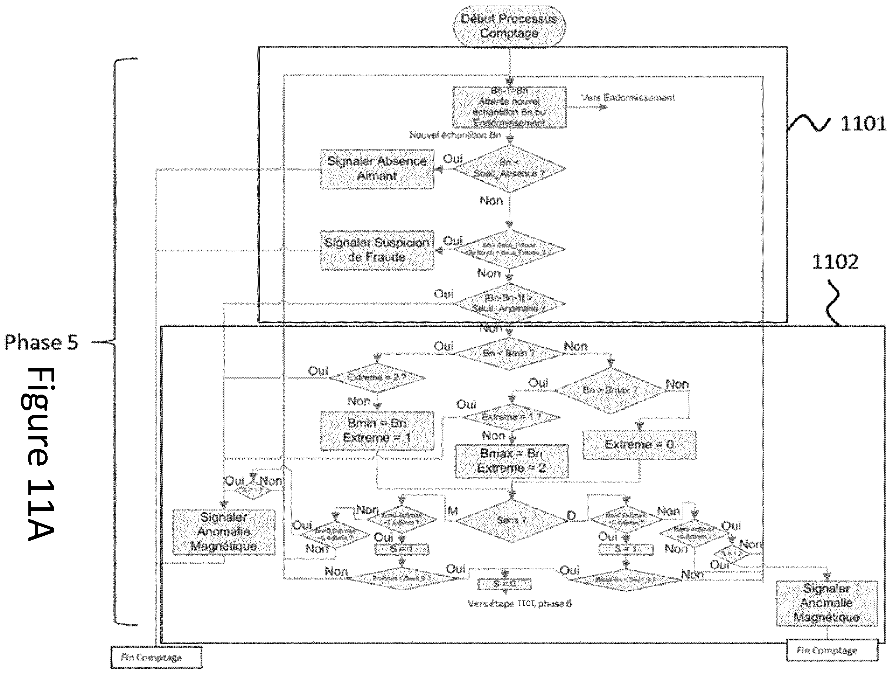

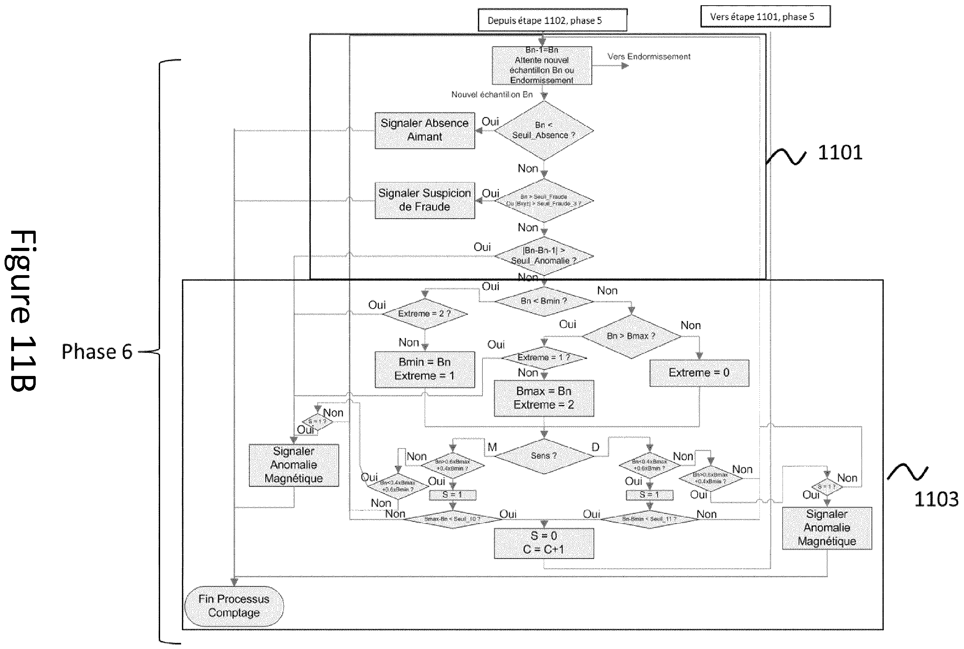

Selon un mode de réalisation illustré sur les figures 11a et 11b, le processus de comptage est découpé en deux phases successives notées phase 5 et phase 6. Chacune des phases débute avec une étape 1101 au cours de laquelle sont réalisés des tests similaires à ceux de l'étape 1002 décrite ci-dessus. Dans chacune des phases, à l'issue de l'étape 1101, des tests supplémentaires sont réalisés lors d'étapes respectivement notées 1102 pour la phase 5 et 1103 pour la phase 6 au cours desquels on détermine si Bn vérifie les conditions pour que le processus passe à la phase suivante.

Plus précisément, à chaque échantillonnage du champ magnétique selon les trois axes x, y et z, les traitements suivants sont mis en oeuvre lors d'une étape 1101 :

L'ancienne valeur courante Bn est mémorisée dans une variable Bn-1 et une nouvelle valeur de Bn est acquise.

Si la variable Bn est inférieure à un seuil noté Seuil_Absence, une absence d'aimant est signalée, le processus de comptage est stoppé et le processus d'auto-calibration est relancé.

Si la variable Bn est supérieure à un seuil noté Seuil_Fraude ou le module d'une des composante |Bx|, |By| ou |Bz|, préférentiellement de la composante correspondant à l'axe faible, est supérieur à un seuil noté Seuil_Fraude_3, une suspicion de fraude est signalée, le processus de comptage est stoppé et le processus d'auto-calibration est relancé.

Si |Bn - Bn-1| est supérieur à un seuil noté Seuil_Anomalie, une anomalie magnétique est signalée, le processus de comptage est stoppé et le processus d'auto-calibration est relancé.

Lors des étapes 1102 et 1103 :

Si aucune absence, fraude ou anomalie n'est détectée :

Si la variable Bn est inférieure à la variable Bmin :

- Si la variable Extreme est égale à 2, une anomalie magnétique est signalée, le processus de comptage est stoppé et le processus d'auto-calibration est relancé.
- Sinon, la variable Bn est mémorisée dans la variable Bmin et la variable Extreme est initialisée à 1

Si la variable Bn est supérieure à la variable Bmax :

- Si la variable Extreme est égale à 1, une anomalie magnétique est signalée, le processus de comptage est stoppé et le processus d'auto-calibration est relancé.
- Sinon, la variable Bn est mémorisée dans Bmax et la variable Extreme est initialisée à 2

Sinon, la variable Extreme est initialisée à 0.

Lors de l'étape 1102 de la phase 5 :

Si la variable Sens est égale à M :

Si la variable Bn est inférieure à un premier seuil tel que 0.4 x Bmax + 0.6 x Bmin c'est-à-dire la moyenne de calibration diminuée de dix pourcents de l'écart entre les valeurs maximale et minimale de la norme mesurée, alors la variable S est initialisée à 1, puis, si Bn-Bmin est inférieur à un seuil noté Seuil_8, le processus passe à l'étape 1101 de la phase 6 après avoir initialisé la variable S à 0.

Sinon, si la variable Bn est supérieure à un deuxième seuil tel que 0.6 x Bmax + 0.4 x Bmin c'est-à-dire la moyenne de calibration augmentée de dix pourcents de l'écart entre les valeurs maximale et minimale de la norme mesurée et si S est égale à 1, alors une anomalie magnétique est signalée, le processus de comptage est stoppé et le processus d'auto-calibration est relancé, sinon si S est égale à 0, le processus passe à l'étape 1101 de la phase 5.

Sinon si la variable Bn est inférieure au deuxième seuil, le processus passe à l'étape 1101 de la phase 5.

Si la variable Sens est égale à D :

Si la variable Bn est supérieure à un troisième seuil tel que 0.6 x Bmax + 0.4 x Bmin, c'est à dire la moyenne de calibration augmentée de dix pourcents de l'écart entre les valeurs maximale et minimale de la norme mesurée, alors la variable S est initialisée à 1, puis, si Bmax-Bn est inférieur à un seuil noté Seuil_9, le processus passe à l'étape 1101 de la phase 6 après que la variable S ait été initialisée à 0.

Sinon, si la variable Bn est inférieure à un quatrième seuil tel que 0.4 x Bmax + 0.6 x Bmin, c'est-à-dire la moyenne de calibration diminuée de dix pourcents de l'écart entre les valeurs maximale et minimale de la norme mesurée, et si la variable S est égale 1, alors une anomalie magnétique est signalée, le processus de comptage est stoppé et le processus d'auto-calibration est relancé. Sinon si S est égale à 0, le processus passe à l'étape 1101 de la phase 5.

Sinon si la variable Bn est supérieure au quatrième seuil, le processus passe à l'étape 1101 de la phase 5.

Lors de l'étape 1103 de la phase 6 :

Si la variable Sens est égale à M :

Si la variable Bn est supérieure à un cinquième seuil tel que 0.6 x Bmax + 0.4 x Bmin, alors la variable S est initialisée à 1, puis, si Bmax-Bn est inférieur à un seuil noté Seuil_10, le processus repasse à l'étape 1101 de la phase 5 après avoir initialisé la variable S à 0 et incrémenté d'une unité le compteur C.

Sinon, si la variable Bn est inférieure à un sixième seuil tel que 0.4 x Bmax + 0.6 x Bmin et si la variable S est égale à 1, alors une anomalie magnétique est signalée, le processus de comptage est stoppé et le processus d'auto-calibration est relancé. Sinon si S est égale à 0, le processus passe à l'étape 1101 de la phase 6.

Sinon si la variable Bn est supérieure au sixième seuil, le processus passe à l'étape 1101 de la phase 6.

Si la variable Sens est égale à D :

Si la variable Bn est inférieure à un septième seuil tel que 0.4 x Bmax + 0.6 x Bmin, alors la variable S est initialisée à 1, puis, si Bn-Bmin est inférieur à un seuil noté Seuil_11, le processus repasse à l'étape 1101 de la phase 5 après avoir initialisé la variable S à 0 et incrémenté d'une unité le compteur C.

Sinon, si la variable Bn est supérieure à un huitième seuil tel que 0.6 x Bmax + 0.4 x Bmin et si la variable S est égale à 1, alors une anomalie magnétique est signalée, le processus de comptage est stoppé et le processus d'auto-calibration est relancé. Sinon si S est égale à 0, le processus passe à l'étape 1101 de la phase 6.

Sinon si la variable Bn est inférieure au huitième seuil, le processus passe à l'étape 1101 de la phase 6.

Avantageusement, les premier, quatrième, sixième et septième seuils sont identiques, et les deuxième, troisième, cinquième et huitième seuils sont identiques.

Avantageusement, les seuils Seuil_1 à Seuil_11 peuvent valoir $400\mu T$. Avantageusement, le seuil Seuil_Anomalie peut valoir $2000\mu T$. Avantageusement le seuil Seuil_Absence peut valoir $200\ \mu T$, et les seuils Seuil_Fraude, Seuil_Fraude_2 ou Seuil_Fraude_3 peuvent valoir 3000 à $5000\ \mu T$.

La mise en oeuvre d'un processus d'auto-calibration permet d'éviter la mémorisation et le chargement de tableaux prédéterminés en fonction de la marque et du modèle du compteur.

En revanche l'utilisation d'un tel processus ne permet pas, contrairement au premier mode de réalisation, de détecter une éventuelle fraude mise en place avant l'activation du dispositif de télérelève, telle que l'installation d'un aimant à proximité du compteur, à moins que ladite fraude ne conduise à mesurer des valeurs de champ magnétique totalement aberrantes.

Une telle auto-calibration peut être réalisée une seule fois à l'installation du dispositif de télérelève de façon à minimiser la consommation d'énergie de celui-ci ou bien être mise en oeuvre plusieurs fois, éventuellement de manière régulière, de façon à mettre à jour le volume de validation ou les valeurs minimales et maximales de la norme et des modules des composantes des vecteurs mesurés.

On notera en outre que le tore ou les seuils de validation utilisés pour un dispositif de télérelève donné peuvent être affinés dans le temps en fonction des mesures remontées au niveau du serveur à distance, de l'ensemble du parc de compteurs ou de dispositifs de télérelève.

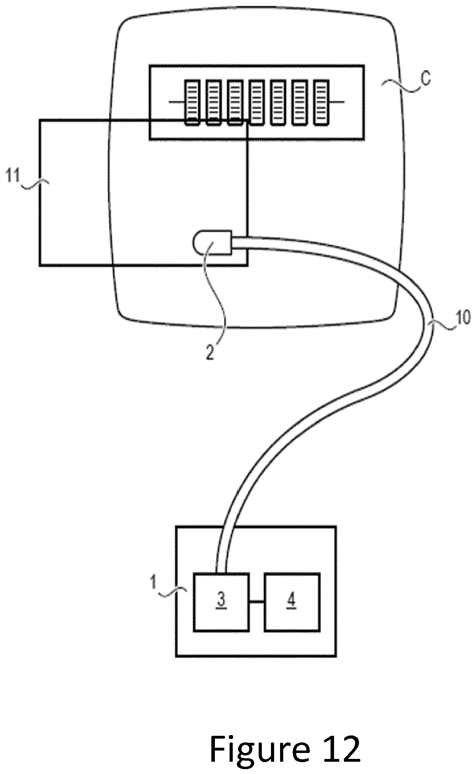

Comme l'illustre la figure 12, le capteur 2 peut être séparé du reste du boîtier 1 et est par exemple relié à celui-ci par une liaison filaire 10. Il est alors possible de positionner le capteur, lequel est de petite dimension (typiquement 2 mm de côté pour 1 mm de largeur) au plus près de la roue unité, puisque la partie formant capteur séparée du boîtier peut alors être collée au droit de la roue ou être intégrée dans la fenêtre de lecture ou à proximité immédiate de celle-ci grâce des moyens d'interface mécanique.

Par exemple, dans un mode de réalisation possible, le capteur 2 est intégré à une étiquette 11 transparente en matière plastique qui est rapportée et collée sur la fenêtre de lecture du compteur C.

On notera en outre qu'un des avantages de l'utilisation d'un capteur magnétomètre 3D est qu'il peut être positionné sans beaucoup de précision puisque la mesure n'a pas nécessairement à être faite dans le plan de rotation de l'aimant mais peut être décalée.

En variante encore, la partie capteur séparée du reste du boîtier peut comporter différents capteurs bistables (capteurs à effet Hall, ampoules Reed, etc.) qui, ensemble, sont configurés pour suivre de façon échantillonnée une rotation de l'aimant A.

Ces capteurs bistables ont par exemple des orientations et/ou des seuils de basculement différents, de sorte qu'ils vont basculer à différents instants du cycle de rotation de la roue du totalisateur TM qui porte l'aimant A, la succession d'impulsions qu'il délivre permettant ainsi à l'électronique 3 de suivre de façon échantillonnée la rotation dudit aimant A.

La consommation qui en résulte sera plus faible qu'avec un capteur de mesure magnétique 3D.

Des tests d'anti-fraude sont possibles par suivi et analyse de la succession de basculements de seuils. Par exemple, lorsque des déclenchements de certains bistables apparaissent intempestivement, sans correspondre à l'ordre de déclenchement qui aurait été attendu d'un simple tour de roue, il est possible d'en déduire une tentative de fraude magnétique. De même lorsque des bistables déclenchés basculent en sens inverse sans que cela ne corresponde à l'ordre attendu, on peut en déduire un arrachement ou décollement du capteur.

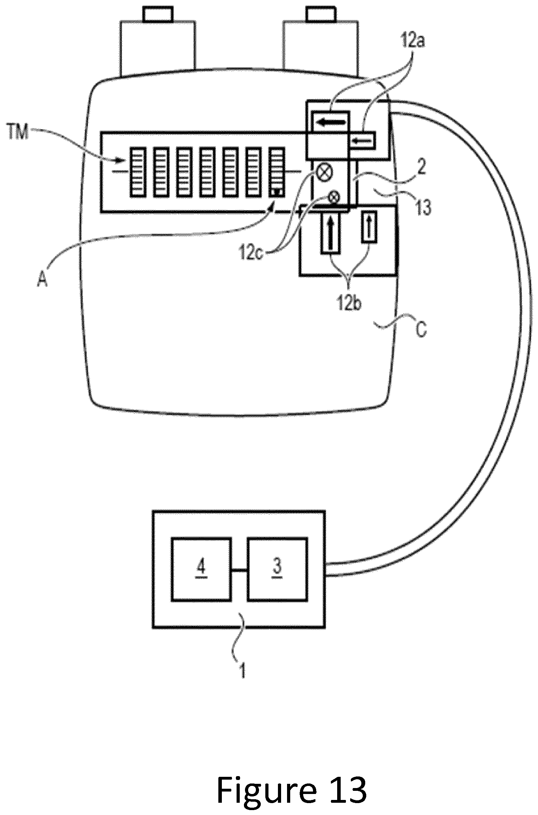

En particulier, dans une variante de réalisation possible illustrée sur la figure 13, le dispositif de télérelève comprend une partie capteur 13 et une partie boîtier 1 séparées et la partie 13 formant capteur comprend à la fois :

- des capteurs bistables 12a, 12b, 12c orientés selon trois directions, par exemple trois directions perpendiculaires, afin de permettre un suivi 3D ;
- un capteur 2 qui est un magnétomètre 3D.

Plusieurs capteurs présentant des seuils différents sont prévus pour une même orientation de capteurs.

Ces capteurs bistables 12a, 12b, 12c sont ainsi configurés pour basculer d'un état à un autre et déclencher des impulsions à différents instants du cycle de rotation de la roue unité du totalisateur mécanique TM et de l'aimant A.

L'état des capteurs bistables 12a, 12b, 12c est relevé avec une fréquence élevée afin de suivre de façon précise les tours (ou fractions de tours) de la roue unité du totalisateur mécanique TM. Le magnétomètre 2, plus consommateur en courant, n'est réveillé qu'épisodiquement par l'électronique 3 du dispositif de télérelève, afin d'effectuer sur les mesures qu'il relève des tests de cohérence pour en particulier vérifier le bon fonctionnement du dispositif de télérelève.

Notamment, l'électronique 3 peut réveiller le capteur 2 lorsqu'un fonctionnement suspect a été repéré à partir des états des capteurs bistables (absence de modifications sur une durée importante par exemple). Elle peut également réveiller le capteur 2 de façon périodique, sur des plages de contrôle de fonctionnement données, par exemple lors d'une période « active » du compteur C. Le capteur peut alors être utilisé pour compter le nombre de tours de la roue unité durant une plage de contrôle et comparer le nombre de tours obtenu à celui déterminé à l'aide des capteurs bistables pendant le même intervalle de temps.

Le capteur 2 est en outre réveillé lors de la mise en place du dispositif de télérelève sur le compteur C, pour valider que la partie 13 formant capteur a été correctement positionnée sur le compteur C et que le dispositif de télérelève fonctionne.

L'utilisation de deux types de capteurs différents (magnétomètre 2 d'une part et capteur bistables 12a, 12b, 12C d'autre part) a en outre l'avantage de permettre une redondance et donc une plus grande garantie de fonctionnement.

Le magnétomètre 2 peut également être employé pour déterminer au moins une marge de fonctionnement du dispositif de télérelève correspondant à l'écart entre une valeur extrémale du champ magnétique auquel est soumis au moins un capteur bistable 12 et un seuil de basculement dudit au moins un capteur bistable. Les valeurs maximale et minimale du champ magnétique auquel sont soumis le ou les capteurs bistables au cours du fonctionnement du compteur sont alors comparées aux seuils de basculement haut et bas du ou des capteurs bistables pour déterminer au moins une marge avec laquelle les variations de champ magnétique engendrées par la rotation de l'aimant A peuvent engendrer des basculements d'état successifs du ou des capteurs bistables.

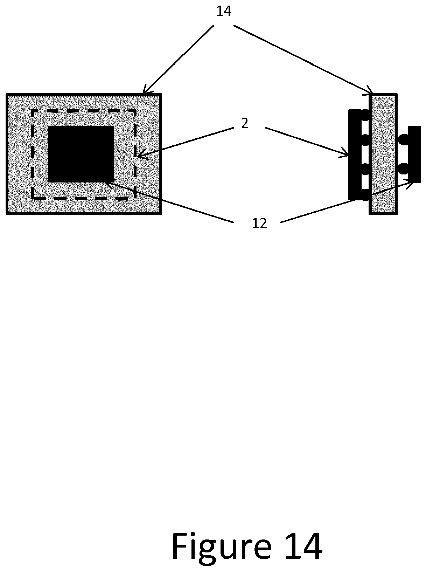

Un tel capteur bistable est généralement sensible au champ magnétique généré par l'aimant A selon un axe privilégié. Le magnétomètre 2 est alors employé pour déterminer une ou plusieurs valeurs du champ magnétique auquel est soumis le capteur bistable selon cet axe privilégié. Ce sont ces valeurs qui sont alors comparées aux seuils de basculement du capteur bistable. Afin de minimiser l'erreur de détermination de ces valeurs par le magnétomètre, il est souhaitable que le magnétomètre et le capteur bistable soient les plus proches que possible l'un de l'autre. A cet effet, le magnétomètre 2 et le capteur bistable 12 peuvent être disposés de part et d'autre d'un circuit imprimé 14, comme représenté en Figure 14.

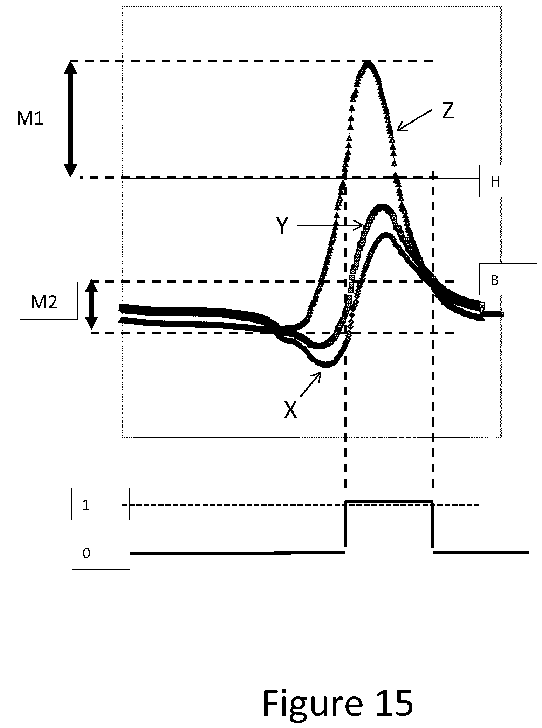

D'une part, une telle marge de fonctionnement peut être déterminée durant le fonctionnement du compteur, par exemple à son initialisation lors du premier tour de la roue des unités de celui-ci, à partir de valeurs mesurées par le magnétomètre et d'une mesure dudit seuil de basculement. La Figure 15 représente un exemple des valeurs de champ magnétique mesurées selon trois axes X, Y et Z durant un tour de roue, le capteur bistable étant supposé dans cet exemple être sensible au champ magnétique selon l'axe Z. Une marge de fonctionnement haute M1, représentée en Figure 15, peut être déterminée par l'électronique 3 à partir des valeurs mesurées par le magnétomètre 2 et de la réponse du capteur bistable 12. Une telle marge correspond à l'écart entre la valeur maximale du champ magnétique selon l'axe privilégié du capteur bistable 12, mesurée par le magnétomètre 2 durant un tour de roue, et le seuil de basculement haut du capteur bistable mesuré H, c'est à dire la valeur de ce même champ magnétique mesurée par le magnétomètre a l'instant de basculement du capteur bistable en état haut, noté 1 en Figure 15. De même, l'électronique 3 peut déterminer une marge de fonctionnement basse M2 correspondant à l'écart entre la valeur minimale du champ magnétique selon l'axe privilégié du capteur bistable mesurée par le magnétomètre durant un tour de roue et le seuil de basculement bas du capteur bistable B, c'est-à-dire la valeur de ce champ magnétique mesurée par le magnétomètre à l'instant de basculement du capteur bistable en état bas, noté 0 en Figure 15. L'électronique 3 peut enfin déterminer une marge globale de fonctionnement égale à la plus petite valeur parmi la marge de fonctionnement haute M1 et la marge de fonctionnement basse M2.

Une telle détermination d'une marge de fonctionnement peut être mise en oeuvre à intervalle régulier au cours du fonctionnement du compteur, par exemple une fois par semaine, afin de surveiller régulièrement le bon fonctionnement du compteur tout en limitant la quantité de ressources consommées.

D'autre part, une telle marge de fonctionnement peut être déterminée lorsque le compteur est à l'arrêt, par exemple lors de l'installation du dispositif de télérelève par un technicien pour permettre à celui-ci de vérifier le bon fonctionnement du dispositif, à partir d'au moins une valeur mesurée par le magnétomètre et d'une valeur prédéterminé dudit seuil de basculement. Le magnétomètre 3D 2 est alors utilisé pour mesurer une valeur du champ magnétique selon ses trois axes de mesure, sous forme d'un vecteur de champ magnétique mesuré. Cette mesure correspond à une position quelconque, inconnue, de l'aimant A. L'électronique 3, ou des moyens de traitement externes utilisés par le technicien, utilisent cette mesure pour estimer les valeurs minimale et maximale du champ magnétique selon cet axe privilégié qui seront ultérieurement vues par le capteur bistable au cours d'un tour de la roue des unités, lorsque le compteur sera en fonctionnement.

Pour cela, l'électronique 3 ou les moyens de traitement estiment la trajectoire de l'extrémité du vecteur de champ magnétique mesuré au cours d'un tour de la roue des unités à partir de la mesure du magnétomètre 3D et d'informations préenregistrées. Par exemple, on peut supposer que l'extrémité du vecteur de champ magnétique mesuré appartient à un cercle ou un tore qui sera décrit par cette extrémité lors d'un tour de rotation de la roue des unités du compteur, et l'électronique ou les moyens de traitement peuvent caractériser ce cercle ou ce tore dans le repère du magnétomètre 2 à partir du vecteur de champ magnétique mesuré et des coordonnées prédéterminées du centre de ce cercle ou ce tore dans ce même repère. De telles informations préenregistrées peuvent être déterminées en usine pour chaque modèle de compteur à partir de compteurs d'essai et d'une pluralité de mesures. A partir de la trajectoire estimée du vecteur de champ magnétique mesuré au cours d'un tour de la roue des unités, l'électronique ou les moyens de traitement estiment les valeurs minimale et maximale du champ magnétique selon cet axe privilégié qui seront vues par le capteur bistable au cours d'un tour de la roue des unités comme étant les coordonnées minimale et maximale selon l'axe privilégié d'un point parcourant la trajectoire estimée.

Ces valeurs minimale et maximale estimées sont ensuite comparées aux seuils de basculement haut et bas du capteur bistable afin de déterminer les marges de fonctionnement haute et basse correspondantes ainsi que la marge globale de fonctionnement. En l'absence de fonctionnement du compteur, et donc de basculement du capteur bistable, il est impossible de mesurer ces seuils de basculement. Des seuils prédéterminés sont alors utilisés pour les comparaisons. Ces seuils prédéterminés peuvent avoir été fournis par le fabricant du capteur bistable ou bien mesurés en usine lors de la fabrication du dispositif de télérelève, et sont mémorisés dans une mémoire du dispositif de télérelève.

Les valeurs de marge de fonctionnement déterminées peuvent être transmises par le transmetteur 4 à un serveur distant, par exemple un serveur d'un fournisseur de gaz et d'électricité. Celui-ci peut ainsi surveiller le bon fonctionnement du compteur et planifier une éventuelle intervention lorsqu'une marge de fonctionnement diminue et se rapproche d'une valeur trop faible pour garantir le bon fonctionnement du compteur.

Les valeurs de marge déterminées peuvent également être affichées sur le compteur afin de permettre une vérification immédiate sur site du bon fonctionnement du ou des capteurs bistables du compteur.

Chaque valeur de marge déterminée peut notamment être affichée ou transmise sous forme d'un niveau de marge correspondant par exemple à la marge déterminée exprimée sous forme d'un pourcentage d'une marge théorique prédéterminée pour le modèle du compteur. Un tel niveau de marge peut également être affiché sous une forme graphique, par exemple sous forme de barres verticales, le nombre de barres affichées étant d'autant plus important que la marge déterminée est grande, de manière analogue à la représentation de la qualité de réception du réseau GSM d'un téléphone mobile sous forme de barres de réception. Le nombre de barres affichées peut être au plus égal à un nombre maximum de barres affichables, par exemple égal à cinq.

La partie 13 formant capteur peut en outre inclure différents autres capteurs : capteurs de température et de pression ou encore accéléromètres (ces derniers permettant par exemple, de détecter un éventuel gonflement de la cuve du compteur C).

Dans les différents exemples qui viennent d'être décrits, il peut être prévu un écran de protection absorbant afin d'isoler le magnétomètre 2 ou le jeu de bistables, des bruits magnétiques ambiants.

Dans ce qui précède, les exemples de dispositif de télérelève et de traitement ont été décrits dans le cas d'un compteur déjà équipé d'un aimant A.

Les principes proposés dans ces exemples peuvent également s'utiliser dans le cas de compteurs mécaniques (tout type) préexistants, non pourvus d'un aimant mobile, soit par modification avant l'installation, soit par adjonction d'une pièce magnétique mobile au compteur sur le terrain au moyen d'un outil adapté.

On notera à cet égard que dans le cas de capteurs magnétomètres notamment, les contraintes de calibration de la fonction magnétique sont potentiellement moindres que dans le cas où l'on utilise, comme dans l'art antérieur, un seul capteur binaire.

Le traitement échantillonné permet de réaliser des apprentissages via des mesures envoyées au cloud et traitées dans un serveur dédié, qui renvoient ensuite les critères de comptage au capteur.

## ANNEXE 1

### Algorithme 1

*Soit une mesure Bx,By,Bz*
*Et Bxmin, Bxmax, Bymin, Bymax, Bzmin, Bzmax les coordonnées minimales et maximales de l'ensemble de parallélépipèdes selon les trois axes x, y et z.*
*Pour tous les faisceaux de courbes*

*Pour tous les points de la courbe*

$$Cube ( int ( (Bx\text{-}Bxmin)/ ( Bxmax\text{-}Bxmin )*n ) , int ( (By\text{-}Bymin)/ ( Bymax\text{-}Bymin )*n ), int ( (Bz\text{-}Bzmin)/ ( Bzmax\text{-}Bzmin )*n ) =1$$

*Fin pour*

*Fin pour*

### Algorithme 2

*Soit une mesure Bx,By,Bz*
*Et Bxmin, Bxmax, Bymin, Bymax, Bzmin, Bzmax les coordonnées minimales et maximales de l'ensemble de parallélépipèdes selon les trois axes x, y et z.*
*Si Cube (int((Bx-Bxmin)/ (Bxmax-Bxmin)*n), int ((By-Bymin)/ ( Bymax-Bymin)*n), int ((Bz-Bzmin)/ (Bzmax-Bzmin)*n) =1*
*Alors OK*
*sinon KO*

**Revendications**

1. Dispositif de télérelève (1) destiné à être rapporté sur un compteur (C) et comportant au moins un magnétomètre (2) et un jeu de capteurs bistables (12a, 12b, 12c) pour le suivi des rotations d'un aimant (A) intégré à une roue d'un totalisateur mécanique (TM) du compteur, le magnétomètre et les capteurs bistables étant configurés pour mesurer un champ magnétique généré par l'aimant et le dispositif étant configuré pour produire un signal échantillonné de ces mesures permettant de détecter une rotation de l'aimant (A).

2. Dispositif selon la revendication 1, **caractérisé en ce que** les capteurs bistables (12a, 12b, 12c) comportent différentes orientations et/ou différents seuils de basculement.

3. Dispositif selon la revendication 1, **caractérisé en ce qu'**il comporte une électronique (3) qui réveille le magnétomètre épisodiquement.

4. Dispositif selon la revendication 1, **caractérisé en ce qu'**il comporte un boîtier d'électronique (1) séparé d'une partie formant capteur (13) intégrant au moins un ou des capteurs configurés pour mesurer un champ magnétique généré par l'aimant et pour produire un signal échantillonné permettant de détecter une rotation de l'aimant (A).

5. Dispositif selon la revendication 1, **caractérisé en ce qu'**il comporte un écran de protection magnétique en matériau absorbant ayant pour fonction d'immuniser le ou les capteurs contre des parasites magnétiques ambiants.

6. Procédé de télérelève de compteur, selon lequel on met en oeuvre sur le signal échantillonné d'un dispositif selon l'une des revendications précédentes un traitement de suivi de la rotation d'un aimant intégré à une roue d'un totalisateur mécanique d'un compteur.

7. Procédé selon la revendication 6, **caractérisé en ce qu'**on met en oeuvre sur un signal obtenu du magnétomètre un traitement de compensation (6) et de filtrage (7).

8. Procédé selon la revendication 6, dans lequel la période d'échantillonnage du signal échantillonné est égale à n*20+10 ms avec n un entier.

9. Procédé selon la revendication 6, **caractérisé en ce qu'**on met en oeuvre sur le signal échantillonné au moins un test de cohérence (8).

10. Procédé selon la revendication 6, **caractérisé en ce qu'**on compare le signal échantillonné à un volume de validation, la comparaison consistant à déterminer si une trajectoire d'une extrémité d'un vecteur produit à partir du signal échantillonné s'inscrit dans le volume de validation.

11. Procédé selon la revendication 10, **caractérisé en ce que** le volume de validation est un volume prédéterminé.

12. Procédé selon la revendication 10, **caractérisé en ce que** le volume de validation est déterminé par un processus d'auto calibration qui réalise un auto-apprentissage des caractéristiques magnétiques sur au moins un tour complet de la roue codeuse aimantée.

13. Procédé selon la revendication 10 **caractérisé en ce que** le volume de validation est initialement prédéterminé, puis précisé en mettant en oeuvre un processus d'autocalibration.

14. Procédé selon la revendication 9, **caractérisé en ce que** ledit test de cohérence comprend la comparaison de la norme du signal échantillonné à des seuils définis en fonction de valeurs minimale et maximale dudit signal acquises par un processus d'auto-calibration.

15. Procédé selon la revendication 6, **caractérisé en ce que** l'on analyse le signal échantillonné ou un signal issu de celui-ci pour déduire le cas échéant de l'évolution dudit signal une éventuelle signature caractéristique d'un dysfonctionnement.

16. Procédé de télérelève de compteur selon la revendication 6, **caractérisé en ce que** le compteur est un compteur mécanique initialement non pourvu d'un aimant, que l'on modifie avant l'installation ou auquel on adjoint une pièce magnétique mobile sur le terrain au moyen d'un outil adapté.

**17.** Procédé selon la revendication 6, **caractérisé en ce qu'**on détermine au moins une marge de fonctionnement correspondant à l'écart entre une valeur extrémale du champ magnétique auquel est soumis au moins un capteur bistable et un seuil de basculement dudit au moins un capteur bistable.

**18.** Procédé selon la revendication 17, selon lequel ladite au moins une marge de fonctionnement est déterminée durant le fonctionnement du compteur à partir de valeurs mesurées par le magnétomètre et d'une mesure dudit seuil de basculement.

**19.** Procédé selon la revendication 17, selon lequel ladite au moins une marge de fonctionnement est déterminée lorsque le compteur est à l'arrêt à partir d'au moins une valeur mesurée par le magnétomètre et d'une valeur prédéterminé dudit seuil de basculement.

## Patentansprüche

**1.** Fernablesevorrichtung (1), die dazu bestimmt ist, an einem Zähler (C) befestigt zu werden, und die mindestens ein Magnetometer (2) und einen Satz bistabiler Sensoren (12a, 12b, 12c) zum Verfolgen der Drehungen eines Magneten (A) umfasst, der in ein Rad eines mechanischen Summenzählwerks (TM) des Zählers integriert ist, wobei das Magnetometer und die bistabilen Sensoren konfiguriert sind, um ein Magnetfeld zu messen, das von dem Magneten erzeugt wird, und wobei die Vorrichtung konfiguriert ist, um ein abgetastetes Signal dieser Messungen zu erzeugen, das das Erfassen einer Drehung des Magneten (A) ermöglicht.

**2.** Vorrichtung nach Anspruch 1, **dadurch gekennzeichnet, dass** die bistabilen Sensoren (12a, 12b, 12c) unterschiedliche Ausrichtungen und/oder unterschiedliche Schaltschwellen umfassen.

**3.** Vorrichtung nach Anspruch 1, **dadurch gekennzeichnet, dass** sie eine Elektronik (3) umfasst, die das Magnetometer episodisch aufweckt.

**4.** Vorrichtung nach Anspruch 1, **dadurch gekennzeichnet, dass** sie ein Elektronikgehäuse (1) umfasst, das von einem einen Sensor bildenden Teil (13) getrennt ist, der mindestens einen oder mehrere Sensoren umfasst, die konfiguriert sind, um ein Magnetfeld zu messen, das von dem Magneten erzeugt wird, und um ein abgetastetes Signal zu erzeugen, das ein Erfassen einer Drehung des Magneten (A) ermöglicht.

**5.** Vorrichtung nach Anspruch 1, **dadurch gekennzeichnet, dass** sie einen magnetischen Schutzschirm aus einem absorbierenden Material umfasst, dessen Aufgabe es ist, den oder die Sensoren gegen magnetische Umgebungsstörungen zu immunisieren.

**6.** Verfahren zum Fernablesen eines Zählers, gemäß dem man an dem abgetasteten Signal einer Vorrichtung nach einem der vorhergehenden Ansprüche eine Nachverarbeitung der Drehung eines Magneten durchführt, der in ein Rad eines mechanischen Summenzählwerks eines Verbrauchszählers integriert ist.

**7.** Verfahren nach Anspruch 6, bei dem man an einem aus dem Magnetometer erhaltenen Signal eine Kompensationsverarbeitung (6) und eine Filterverarbeitung (7) durchführt.

**8.** Verfahren nach Anspruch 6, bei der die Abtastperiode des abgetasteten Signals gleich n*20+10 ms ist, wobei n eine ganz Zahl ist.

**9.** Verfahren nach Anspruch 6, **dadurch gekennzeichnet, dass** man an dem abgetasteten Signal mindestens einen Kohärenztest (8) durchführt.

**10.** Verfahren nach Anspruch 6, **dadurch gekennzeichnet, dass** man das abgetastete Signal mit einem Validierungsvolumen vergleicht, wobei der Vergleich darin besteht, dass man bestimmt, ob sich eine Bahn von einem Ende eines Vektors, der anhand des abgetasteten Signals erzeugt wird, in das Validierungsvolumen einschreibt.

**11.** Verfahren nach Anspruch 10, **dadurch gekennzeichnet, dass** das Validierungsvolumen ein vorgegebenes Volumen ist.

**12.** Verfahren nach Anspruch 10, **dadurch gekennzeichnet, dass** das Validierungsvolumen durch einen Selbstkalibrierungsvorgang bestimmt wird, der ein Selbstlernen der magnetischen Eigenschaften über mindestens eine vollständige Umdrehung der magnetischen Kodierscheibe durchführt.

**13.** Verfahren nach Anspruch 10, **dadurch gekennzeichnet, dass** das Validierungsvolumen ursprünglich vorgegeben und dann präzisiert wird, indem ein Selbstkalibrierungsvorgang durchgeführt wird.

**14.** Verfahren nach Anspruch 9, **dadurch gekennzeichnet, dass** der Kohärenztest den Vergleich der Norm des abgetasteten Signals mit Schwellwerten umfasst, die in Abhängigkeit von Minimal- und Maximalwerten des Signals definiert sind, welche durch einen Selbstkalibrierungsvorgang erfasst werden.

**15.** Verfahren nach Anspruch 6, **dadurch gekennzeichnet**, das man das abgetastete Signal oder ein aus diesem hervorgegangenes Signal analysiert, um gegebenenfalls aus dem Verlauf des Signals eine mögliche charakteristische Signatur einer Funktionsstörung herzuleiten.

**16.** Verfahren zum Fernablesen eines Zählers nach Anspruch 6, **dadurch gekennzeichnet, dass** der Zähler ein ursprünglich nicht mit einem Magneten versehener mechanischer Zähler ist, den man vor der Installation modifiziert oder dem man vor Ort mittels eines geeigneten Werkzeugs ein bewegliches magnetisches Teil hinzufügt.

**17.** Verfahren nach Anspruch 6, **dadurch gekennzeichnet, dass** man mindestens eine Funktionsspanne bestimmt, die dem Abstand zwischen einem Extremalwert des Magnetfeldes, dem mindestens ein bistabiler Sensor ausgesetzt ist, und einer Schaltschwelle des mindestens einen bistabilen Sensors entspricht.

**18.** Verfahren nach Anspruch 17, bei dem die genannte mindestens eine Funktionsspanne während des Betriebs des Zählers anhand von Werten, die von dem Magnetometer gemessen werden, und einer Messung der Schaltschwelle bestimmt wird.

**19.** Verfahren nach Anspruch 17, bei dem die mindestens eine Funktionsspanne anhand mindestens eines von dem Magnetometer gemessenen Wertes und eines Wertes, der von der Schaltschwelle vorgegeben wird, bestimmt wird, wenn der Zähler still steht.

**Claims**

**1.** A remote reading device intended to be attached to a meter (C) and comprising at least one magnetometer and a set of bistable sensors for tracking the rotations of a magnet (A) integrated into a wheel of a mechanical totalizer (TM) of the meter, **characterized in that** the magnetometer and the bistable sensors are configured to ensure sampled tracking of rotation of the magnet (A) and the device being configured to produce a sampled signal of these measurements.

**2.** The device according to claim 1, **characterized in that** the bistable sensors comprise different orientations and/or different tilting thresholds.

**3.** The device according to claim 1, **characterized in that** it comprises electronics which episodically wake up the magnetometer.

**4.** The device according to claim 1, **characterized in that** it comprises an electronics casing separated by a part forming the sensor integrating the magnetometer and the bistable sensors configured to ensure sampled tracking of rotation of the magnet (A).

**5.** The device according to claim 1, **characterized in that** it comprises a magnetic protective screen made of absorbent material whereof the function is to immunise the magnetometer and the bistable sensors against ambient magnetic parasites.

**6.** A remote meter-reading method, according to which follow-up processing of the rotation of a magnet integrated into a wheel of a mechanical totalizer of a meter is executed on a sampled signal obtained from the output(s) of at least one magnetometer and a set of bistable sensors of a device according to one of the preceding claims.

**7.** The method according to claim 6, **characterized in that** compensation and filtering processing is executed on a signal obtained from the magnetometer.

8. The method according to claim 6, wherein the sampling period of the sampled signal is equal to n*20+10 ms with n a whole number.

9. The method according to claim 6, **characterized in that** at least one coherence test is conducted on the sampled signal.

10. The method according to claim 6, **characterized in that** the sampled signal or a signal originating from the latter is compared to volume validation.

11. The method according to claim 10, **characterized in that** the volume validation is a predetermined volume.

12. The method according to claim 10, **characterized in that** the volume validation is determined by a self-calibration process which executes self-learning of the magnetic characteristics on at least one complete revolution of the magnetised coding wheel.

13. The method according to claim 10 **characterized in that** the volume validation is initially predetermined, then specified by executing a self-calibration process.

14. The method according to claim 9, **characterized in that** said coherence test comprises the comparison of the standard of the sampled signal to thresholds defined as a function of minimal and maximal values of said signal acquired by a self-calibration process.

15. The method according to claim 6, **characterized in that** the sampled signal or a signal originating from the latter is analysed to deduce any signature characteristic of malfunction from the evolution of said signal where needed.

16. The remote meter-reading method according to claim 6, **characterized in that** the meter is a mechanical meter initially not provided with a magnet, which is modified prior to installation or to which is added a mobile magnetic piece on the ground by means of an adapted tool.

17. The method according to claim 6, **characterized in that** at least one margin of operation is determined corresponding to the spread between an extreme value of the magnetic field to which at least one bistable sensor is subjected and a tilting threshold of said at least one bistable sensor.

18. The method according to claim 17, according to which said at least one margin of operation is determined during operation of the meter from values measured by the magnetometer and measuring of said tilting threshold.

19. The method according to claim 17, according to which said at least one margin of operation is determined when the meter is stopped from at least one value measured by the magnetometer and a predetermined value of said tilting threshold.

Figure 1

Figure 2A

Figure 2B

Figure 3

Figure 4A

Figure 4B

Figure 4C

Figure 4D

Figure 4E

Figure 4F

Figure 5

Figure 6

Figure 7

Figure 8

Figure 9

Figure 10

Figure 10A

1002

Vers étape 1001, phase 1

Depuis étape 1003, phase 1

Bn-1=Bn
Attente nouvel échantillon Bn ou
Endormissement

Vers Endormissement

Nouvel échantillon Bn

Signaler Absence
Aimant

Oui

Bn < Seuil_Absence ?

Non

Signaler Suspicion
de Fraude

Oui

Bn > Seuil_Fraude
Ou |Bx| > Seuil_Fraude_2
Ou |By| > Seuil_Fraude_2
Ou |Bz| > Seuil_Fraude_2 ?

Non

Signaler
Anomalie
Magnétique

Oui

|Bn-Bn-1| >
Seuil_Anomalie ?

Non

|Bx| > Bx_max ?

Oui

Bx_max = |Bx|

Non

|By| > By_max ?

Oui

By_max = |By|

Non

|Bz| > Bz_max ?

Oui

Bz_max = |Bz|

Non

**Phase 2**

Oui

Bn < Bmin ?

Non

Bmin = Bn

Bn > Bmax ?

Oui

Bmax = Bn

Non

1004

Sens ?

M

D

Non

Bmax-Bn >
Seuil_2 ?

Oui

Oui

Bn-Bmin >
Seuil_3 ?

Non

Vers étape 1002, phase 3

# Figure 10B

Figure 10C

Figure 10D

Figure 11A

Figure 11B

Figure 12

Figure 13

Figure 14

Figure 15

## RÉFÉRENCES CITÉES DANS LA DESCRIPTION

**Documents brevets cités dans la description**

- US 2009284392 A1
- US 2010072990 A1